# EUROPÄISCHE PATENTSCHRIFT

(11) **EP 4 117 896 B1**
(45) Veröffentlichungstag und Bekanntmachung des Hinweises auf die Patenterteilung: **16.09.2026**
(21) Anmeldenummer: 21713890.8
(22) Anmeldetag: 08.03.2021
(51) Int. Cl.: B29C 71/00, B33Y 40/20, B29C 64/35

(54) **VORRICHTUNG UND VERFAHREN ZUR OBERFLÄCHENBEHANDLUNG VON FORMTEILEN**
DEVICE AND METHOD FOR TREATING THE SURFACE OF MOULDED PARTS
DISPOSITIF ET PROCÉDÉ DE TRAITEMENT DE SURFACE DE PIÈCES MOULÉES

(30) Priorität: 09.03.2020 DE 102020106373; 29.09.2020 DE 102020125414
(43) Veröffentlichungstag der Anmeldung: 18.01.2023
(73) Patentinhaber: DyeMansion GmbH, 82152 Planegg (DE)
(72) Erfinder: LICHTENBERGER, Niels, 35037 Marburg (DE); ERDT, Lukas, 80805 München (DE); FOLGER, Alena, 82288 Kottgeisering (DE); KRAMER, Philipp, 80339 München (DE); HERZ, Fabian, 82335 Berg (DE)
(74) Vertreter: 2s-ip Schramm Schneider Bertagnoll Patent- und Rechtsanwälte Part mbB
(86) Internationale Anmeldenummer: PCT/EP2021/055775
(87) Internationale Veröffentlichungsnummer: WO 2021/180648

(56) Entgegenhaltungen:
- EP-A1- 3 587 092
- WO-A1-2019/190902
- DE-B3- 102018 121 915
- US-A1- 2019 151 886

## Beschreibung

### Gebiet der Erfindung

Die Erfindung betrifft ein Verfahren zum Behandeln einer Oberfläche zumindest eines in einem 3D-Druckvefahren hergestellten Formteils.

### Hintergrund der Erfindung

Es ist bekannt, Formteile in einem 3D-Druckverfahren herzustellen. Unter 3D-Druckverfahren werden additive Fertigungsverfahren verstanden, bei denen ein Formteil schichtweise aufgebaut wird, insbesondere unter Verwendung eines Kunststoffes.

Derartige additive Fertigungsverfahren haben den Nachteil, dass die damit hergestellten Formteile in der Regel keine geschlossene Oberfläche, d.h. eine fertigungsbedingte raue Oberfläche aufweisen, was in vielen Fällen den haptischen Eindruck beim Benutzer des Formteils negativ beeinflussen kann. Zudem neigt eine raue Oberfläche eines solchen Formteiles dazu, relativ schnell zu verschmutzen, wobei ein Reinigen der Oberfläche nur mit erheblichem Aufwand möglich ist. Zudem weist die Oberfläche solcher Formteile fertigungsbedingt eine Vielzahl von Poren auf.

Um die Oberflächen der in einem 3D-Druckverfahren hergestellten Formteile zu glätten, können die Oberflächen mechanisch bearbeitet werden, beispielsweise abgeschliffen und/oder gestrahlt werden. Nachteilig ist hierbei allerdings, dass ein - wenn auch geringer - Materialabtrag von der Oberfläche des Formteils erfolgt, der zum Erzielen der gewünschten Oberflächenglätte meist oberhalb vorbestimmter Toleranzwerte liegt, sodass mit dem Glätten der Oberfläche eine unerwünschte Veränderung der Geometrie des Formteils einhergeht. Zudem gelangt man beim Schleifen nicht in kleine Ecken oder kleine Aussparungen, die dann unbearbeitet bleiben und damit nicht geglättet sind. Bei flexiblen Formteilen lassen sich solche mechanischen Verfahren zum Glätten der Oberfläche nicht oder nur sehr schwer anwenden. Zudem können Bereiche der Oberfläche, die extrem konkav ausgestaltet sind oder Hinterschneidungen aufweisen, nur unter hohem Aufwand oder gar nicht mechanisch geglättet werden. Bei sehr filigranen Oberflächenstrukturen besteht beim Schleifen oder beim Strahlen zudem die Gefahr, dass diese beschädigt werden. Ferner werden an der Oberfläche vorhandene Poren auch beim Schleifen oder Strahlen nur unzureichend geschlossen.

Ein weiterer Nachteil der mechanischen Oberflächenglättung besteht darin, dass sich diese für eine Serienfertigung nicht eignen.

Darüber hinaus gibt es Möglichkeiten der chemischen Glättung der Formteile. Hierfür wird die Oberfläche mit einem Lösemittel (beispielsweise Hexaflourisopropanol (HFIP), Aceton, Ethanol, Benzylalkohol, Dichlormethan, Ameisensäure oder Gemische hiervon) angelöst. Anschließend härtet die angelöste Oberfläche wieder aus und man erhält ein Bauteil mit geglätteter Oberfläche. Viele Formteile, welche in einem 3D Druckverfahren hergestellt werden, bestehen aus Kunststoffen mit geringer polarer Oberflächenenergie, deren Oberflächen sich mit den genannten Lösemitteln nicht glätten lassen. Nachteilig bei den genannten Lösungsmitteln ist zudem, dass sie eine niedrige Umweltverträglichkeit besitzen. Insbesondere halogenierte Lösungsmittel sind meist bio-persistent und haben einen negativen Einfluss auf die menschliche Gesundheit. Zusätzlich ist die Herstellung dieser Lösungsmittel abhängig von nicht-erneuerbaren Rohstoffen.

Aus der DE 10 2018 121915 B3 ist ein Verfahren zum Behandeln einer Oberfläche eines in einem 3D-Druck-Verfahren hergestellten Formteils bekannt, wobei das Formteil in ein druckdichtes Behältnis eingebracht wird, nach dem Einbringen des Formteils im Behältnis ein Unterdruck erzeugt wird, ein Lösungsmittel bis auf eine vorbestimmte Lösungsmitteltemperatur erwärmt wird, und das erwärmte Lösungsmittel aus einem Lösungsmittelbehältnis in das den Unterdruck aufweisende Behältnis eingebracht wird. Der Lösungsmitteldampf kondensiert an der Oberfläche des Formteils. Aus der DE 10 2018 121915 B3 ist ferner eine Vorrichtung zur Durchführung dieses Verfahrens bekannt.

### Aufgabe der Erfindung

Aufgabe der vorliegenden Erfindung ist es daher, Lösungen bereitzustellen, die es erlauben, Oberflächen von in einem 3D-Druckverfahren hergestellten Formteilen effizient und umweltverträglich zu glätten bzw. zu homogenisieren, ohne dass es hierbei zu wesentlichen Veränderungen der Geometrie der Formteile kommt und die auch bei flexiblen Formteilen und bei Formteilen, die mechanisch schwer zu bearbeitende Oberflächenabschnitte aufweisen, effizient einsetzbar sind.

### Erfindungsgemäße Lösung

Diese Aufgabe wird erfindungsgemäß nach den unabhängigen Ansprüchen gelöst. Vorteilhafte Ausgestaltungen und Weiterbildungen der Erfindung ergeben sich aus den abhängigen Ansprüchen. Unter 3D-Druckverfahren werden rein additive Fertigungsverfahren verstanden.

Bereit gestellt wird demnach ein Verfahren zum Behandeln einer Oberfläche eines in einem 3D-Druckverfahren mit einem Kunststoff hergestellten Formteils, wobei ein Lösungsmittel aus der Gruppe der bio-basierten Lösungsmittel auf die Oberfläche des Formteils aufgebracht wird, wobei das bio-basierte Lösungsmittel ausgewählt wird aus der Gruppe umfassend D-Limonen, L-Limonen, Dipenten, 1,8-Cineol, Pinene, α-Pinen, β-Pinen, δ-Pinen, und Kombinationen hiervon.

Vorteilhaft ist es, wenn das Lösungsmittel in dampfförmiger Form auf die Oberfläche des Formteils aufgebracht wird.

Die genannten Lösungsmittel ermöglichen aufgrund ihrer geringen Oberflächenspannung eine homogene Benetzung der Oberfläche des Formteils.

Bio-basierte Lösungsmittel haben den Vorteil, dass sie aus natürlichen Rohstoffen gewonnen werden können. Außerdem sind sie meist nicht gesundheitsschädlich, nicht giftig und nicht wasser- und/oder luftgefährdend. Allerdings weisen sie im Vergleich zu synthetischen halogenierten Lösungsmitteln teilweise eine erhöhte Brennbarkeit auf.

Durch das erfindungsgemäße Verfahren, welches bevorzugt in sauerstoffarmer Atmosphäre (Unterdruck, Schutzgas) ausgeführt wird, können auch entzündliche, bio-basierte Lösungsmittel eingesetzt werden. Als vorteilhaft haben sich bio-basierte Lösungsmittel erwiesen, welche einen Flammpunkt über 30 °C aufweisen. Besonders vorteilhaft sind Lösungsmittel mit einem Flammpunkt über 42 °C. Die Erfindung ist allerdings nicht auf diese Lösungsmittel beschränkt, da eine Explosion auch durch eine inerte Umgebung (z. B. Stickstoffatmosphäre) oder funkenfreies Arbeiten, verhindert werden kann.

Unter dem Gesichtspunkt der Entflammbarkeit haben sich folgende Lösungsmittel als vorteilhaft erwiesen: 1,8-Cineol, Limonen.

Bei der Verwendung von Naturstoffen hat es sich als besonders vorteilhaft erwiesen, dem bio-basierten Lösungsmittel, welches zum Behandeln der Oberfläche bzw. zum Glätten des Formteils verwendet wird, Zusätze zuzugeben. Insbesondere Antioxidantien, Hitze-Stabilisatoren und Polymerisationsinhibitoren haben sich als vorteilhafte Zusätze erwiesen, da Naturstoffe meist nicht dauerhaft hitzestabil sind und zu Oxidation bei Kontakt mit (Luft) Sauerstoff neigen. Dies hat den Vorteil, dass die als Lösungsmittel verwendeten Naturstoffe für lange Zeit genutzt werden können und dabei eine stabile, reproduzierbare Oberflächenbehandlung von Formteilen garantiert wird..

Zusätze können ausgewählt werden aus der Gruppe umfassend
- sterisch gehinderte Phenolverbindungen,
- sterisch gehinderte Aminde (HALS),
- Phosphite,
- Phosphonite, und
- Kombinationen bzw. Mischungen hiervon.

Die Zusätze können in Konzentrationen zwischen 5 ppm und 4000 ppm bezogen auf das Lösungsmittel-Zusatz-Gemisch dem Lösungsmittel zugegeben werden.

Vorteilhaft kann es sein, wenn die Zusätze einen Siedepunkt und eine Zersetzungstemperatur aufweisen, welche mindestens 30 °C, besonders bevorzugt mindestens 50 °C über dem Siedepunkt des für die Oberflächenbehandlung verwendeten bio-basierten Lösungsmittels liegen.

Der Kunststoff des Formteils wird ausgewählt
- aus der Gruppe umfassend thermoplastische,
- aus der Gruppe umfassend reine Polymere, Co-Polymere und Gemische hiervon, vorzugsweise aus der Gruppe umfassend Polyester, Polyketone, Polysulfide, Polysulfone, Polyolefine, Polycarbonate, Polythioether, Kautschuke, Latex, Polystyrole, und Kombination bzw. Mischungen hiervon,
- besonders bevorzugt aus der Gruppe umfassend Polyolefine, Polyketone, Polystyrole, Polycarbonate, Polysulfone, und Kombinationen bzw. Mischungen hiervon.

Bei der Verwendung von bio-basierten Lösungsmitteln ist es wichtig, den Prozess der Oberflächenbehandlung von Formteilen sehr genau zu steuern. Damit kann ein Zersetzen der meist nicht so stabilen Verbindungen verhindert werden. Gleichzeitig ist das Prozessfenster für eine geeignete Bearbeitungstemperatur sehr gering. Letzteres ist in der geringeren Aggressivität der bio-basierten Lösungsmittel begründet. Zudem führt ein Glätten von Formteilen mit Lösungsmitteldampf zu homogeneren Ergebnissen als ein Glätten mit flüssigem Lösungsmitteldampf. Um trotz dieser Einschränkungen ein homogenes Glätten von Oberflächen eines in einem 3D-Druckverfahren hergestellten Formteils mit einem bio-basierten Lösungsmittel zu erzielen, ist eine genaue Prozesssteuerung von Vorteil bzw. notwendig.

Besonders vorteilhaft hat sich das erfindungsgemäße Verfahren für Formteile erwiesen, welche in pulverbasierten oder filamentbasierten 3D-Druckverfahren hergestellt wurden. Dabei werden in einem Schichtbauverfahren einzelne Schichten miteinander verschmolzen. Besonders vorteilhaft ist das erfindungsgemäße Verfahren für Formteile, welche im SLS-Verfahren (Selektives Lasersintern), im MJF-Verfahren (MultiJet Fusion) oder im HSS-Verfahren (High-Speed Sintering), im FFF-Verfahren (Fast Filament Fabrication), im FDM-Verfahren (Fused Deposition Molding) oder mittels dem STEP-Verfahren (Selective Thermographic Electropholographic process) hergestellt wurden.

Schließlich wird die Verwendung eines Lösungsmittels aus der Gruppe der bio-basierten Lösungsmittel zum Behandeln einer Oberfläche eines in einem 3D-Druckverfahren mit einem Kunststoff hergestellten Formteils bereitgestellt, wobei das Lösungsmittel auf die Oberfläche des Formteils aufgebracht wird und wobei das bio-basierte Lösungsmittel ausgewählt wird aus der Gruppe umfassend D-Limonen, L-Limonen, Dipenten, 1,8-Cineol, Pinene, α-Pinen, β-Pinen, δ-Pinen, und Kombinationen hiervon.

Bei der erfindungsgemäßen Verwendung des bio-basierten Lösungsmittels kann dieses in dampfförmiger Form auf die Oberfläche des Formteils aufgebracht werden.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: eine vergrößerte Darstellung eines Ausschnittes einer Oberfläche eines in einem 3D-Druckverfahren hergestellten Formteils, die nach dem erfindungsgemäßen Verfahren geglättet wird;
- Fig. 2: ein Ablaufdiagramm zur Verdeutlichung des erfindungsgemäßen Verfahrens;
- Fig. 3: ein erstes Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 4: ein zweites Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 5: ein drittes Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 6: ein viertes Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 7: ein fünftes Beispiel für einen Temperaturverlauf der Innentemperatur eines Innenraumes einer Oberflächenbearbeitungsvorrichtung, wobei hier dreimal ein Lösungsmittel in den Innenraum gegeben wurde;
- Fig. 8: eine schematische Darstellung einer Vorrichtung zum Behandeln einer Oberfläche zumindest eines in einem 3D-Druckverfahren hergestellten Formteils;
- Fig. 9: eine schematische Darstellung einer weiteren Ausgestaltung einer Vorrichtung zum Behandeln einer Oberfläche zumindest eines in einem 3D-Druckverfahren hergestellten Formteils.

### Detaillierte Beschreibung der Erfindung

Sofern nachfolgend von "Lösungsmittel" gesprochen wird, sind immer die vorstehend genannten Lösungsmittel gemeint.

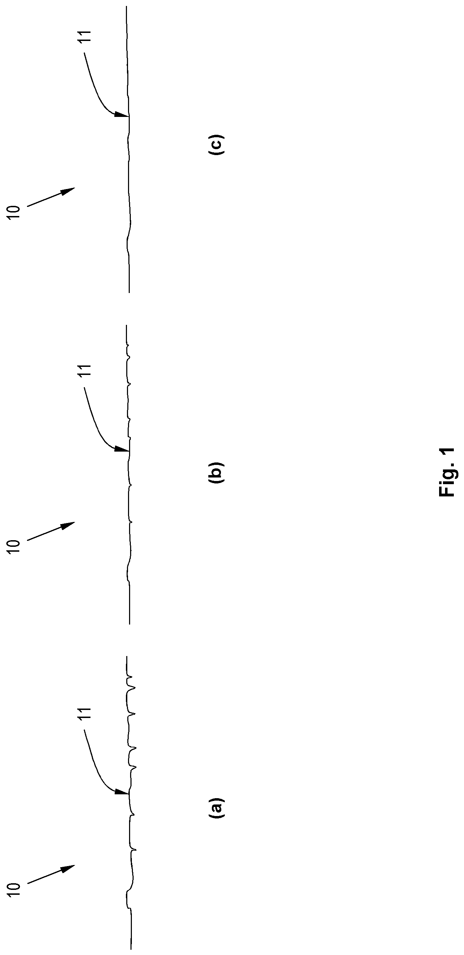

**Fig. 1** zeigt in Abbildung (a) einen vergrößerten Ausschnitt einer Oberfläche 11 eines in einem 3D-Druckverfahren hergestellten Formteils 10. Zur Herstellung des Formteils 10 ist hier ein pulverbasiertes Druckverfahren verwendet worden. Die Oberfläche 11 des Formteils 10 weist fertigungsbedingte Unebenheiten, insbesondere Poren auf, die ein Anhaften von Schmutz bzw. Verunreinigungen an der Oberfläche 11 des Formteils 10 begünstigen. Die raue bzw. poröse Oberfläche 11 des Formteils 10 wirkt sich zudem negativ auf die Haptik des Formteils 10 aus. Die in Abbildung (a) gezeigte Oberfläche wurde noch nicht mit dem erfindungsgemäßen Verfahren bearbeitet.

Erfindungsgemäß wird die Oberfläche 11 des Formteils 10 geglättet, um die Unebenheiten, insbesondere die Poren zu beseitigen bzw. zu verschließen. Hierzu wird an der Oberfläche 11 des Formteils 10 ein Lösungsmittel in Form von Lösungsmitteldampf aufgebracht, der an der Oberfläche des Formteils kondensiert. Anschließend wird das Formteil getrocknet. Nach dem Aufbringen des Lösungsmitteldampfes bzw. nachdem der Lösungsmitteldampf an der Oberfläche kondensiert ist, kann es vorteilhaft sein, eine vorbestimmte Haltezeit vorzusehen, bevor der Trocknungsvorgang eingeleitet wird. Durch diese Haltezeit kann ein noch besserer Glättungseffekt erzielt werden. Ebenso kann es vorteilhaft sein, nach dem Trocknungsvorgang eine Haltezeit vorzusehen, wodurch Lösemittelrückstände an dem Formteil weiter reduziert werden können. Bei Haltezeiten sind optional, haben sich aber als vorteilhaft erwiesen.

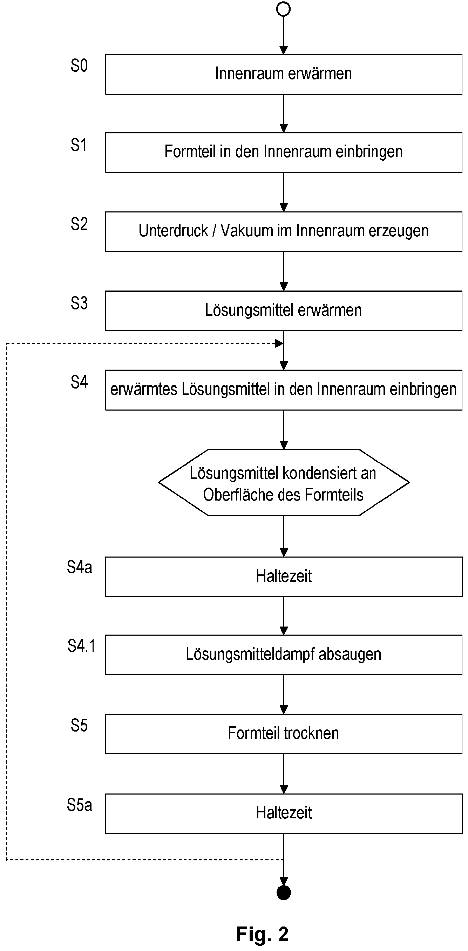

Das erfindungsgemäße Verfahren zum Behandeln der Oberfläche wird im Detail mit Bezug auf Fig. 2 bis Fig. 7 beschrieben.

Das Behandeln der Oberfläche 11 kann mehrere Zyklen umfassen, wobei in jedem Zyklus Lösungsmittel, d.h. Lösungsmitteldampf auf die Oberfläche des Formteils aufgebracht wird und anschließend das Formteil 10 getrocknet wird. Je nach verwendetem Material, das zur Herstellung des Formteils in dem 3D-Druckverfahren verwendet wurde, und je nach Anforderung der zu erreichenden Glätte der Oberfläche kann ein einziger Zyklus ausreichend sein. Mehrere Zyklen sind jedoch vorteilhaft. In jedem Zyklus können die vorstehend genannten Haltezeiten nach dem Aufbringen des Lösungsmitteldampfes und/oder nach dem Trocknungsvorgang vorgesehen werden, wobei auch hier die Haltezeiten optional sind.

Die Abbildung (b) zeigt die Oberfläche 11 des Formteils 10 nach einem ersten Behandlungszyklus, in dem Lösungsmittel in Form von Lösungsmitteldampf auf die Oberfläche 11 aufgebracht wurde und anschließend getrocknet wurde. Deutlich erkennbar ist hier, dass die Oberfläche 11 im Vergleich zu der in Abbildung (a) gezeigten Oberfläche deutlich glatter ist, insbesondere nahezu keinerlei Poren aufweist.

Um eine noch weitere Glättung der Oberfläche zu bewirken, kann ein weiterer Bearbeitungszyklus durchgeführt werden, in dem nochmals Lösungsmittel in Form von Lösungsmitteldampf auf die Oberfläche 11 des Formteils 10 aufgebracht wird und anschließend das Formteil 10 getrocknet wird.

Die Abbildung (c) zeigt die Oberfläche 11 des Formteils 10 nach dem zweiten Behandlungszyklus. Erkennbar ist hierbei, dass die Oberfläche 11 im Vergleich zu der in Abbildung (b) gezeigten Oberfläche noch weiter geglättet wurde. Zudem ist erkennbar, dass das Glättungsverfahren zu nahezu keiner Veränderung der Geometrie des Formteils geführt hat. Im Unterschied zur mechanischen Oberflächenbehandlung findet hier nahezu kein Materialabtrag statt, da mit dem auf der Oberfläche 11 aufgebrachten Lösungsmittel die Oberfläche der Formteile lediglich leicht angelöst wird, wodurch Unebenheiten beseitigt werden. Ein wesentlicher Vorteil besteht jedoch darin, dass an der Oberfläche vorhandene Poren verschlossen werden.

Die so behandelten Formteile weisen hinsichtlich der Oberflächenglätte eine besonders hohe Güte auf, sodass in vielen Fällen auch auf ein Imprägnieren der Oberfläche verzichtet werden kann.

In einer Ausgestaltung der Erfindung kann es vorteilhaft sein, das Lösungsmittel nicht in dampfförmigem sondern flüssigem Zustand in Kontakt mit den Formteilen zu bringen. Vorteilhaft ist dabei, dass die gesamte Oberfläche des Formteils mit der gleichen Menge an bio-basierten Lösungsmittel in Kontakt gebracht werden kann, wodurch ein homogenes Glättungsergebnis erreicht werden kann. Dadurch kann eine stärkere Glättung der Oberfläche bereits bei der ersten Iteration erzielt werden. Des weiteren ist ein Tauchverfahren, welches nicht auf die Kondensation des Lösungsmittels angewiesen ist, nicht so temperatursensitiv, wodurch der Einfluss der Wärmekapazität des zu glättenden Formteils minimiert wird und homogenere Ergebnisse bei stark unterschiedlichen Formteildicken erzielt werden können. Vorteilhaft bei einer solchen Ausgestaltung ist außerdem, dass das Verfahren bei niedrigeren Temperaturen und/oder höheren Drücken durchgeführt werden kann. Prozesstechnisch können sich dadurch Vereinfachungen ergeben, beispielsweise durch das Entfallen von Lösungsmittel in verschiedenen Aggregatszuständen.

**Fig. 2** zeigt ein Ablaufdiagramm gemäß eines Ausführungsbeispiels des erfindungsgemäßen Verfahrens.

Für die Durchführung des Verfahrens ist eine Vorrichtung vorgesehen, die ein druckdichtes Behältnis mit einem Innenraum, in dem die Oberfläche des Formteils behandelt wird, und ein Behältnis, das ein Lösungsmittel enthält, aufweist. Diese beiden Behältnisse sind über eine Leitung miteinander verbunden, wobei über ein Ventil die Zufuhr von Lösungsmittel in das Behältnis, in dem das Formteil behandelt wird, gesteuert wird. Das Behältnis, in dem das Formteil behandelt wird, ist druckdicht ausgestaltet. Das Behältnis, das das Lösungsmittel enthält, ist vorzugsweise ebenfalls druckdicht ausgestaltet.

Das in einem 3D-Druckverfahren hergestellte Formteil wird in dem Schritt S1 in den Innenraum des druckdichten Behältnisses eingebracht.

Vor dem Einbringen des Formteils in das druckdichte Behältnis kann das Formteil auf eine bestimmte Temperatur erwärmt werden, beispielsweise auf etwa zwischen 50 °C und 150 °C, vorzugsweise auf etwa 90°C und 120°C. Wie weit das Formteil erwärmt werden kann, hängt im Wesentlichen von dem verwendeten Material bzw. Kunststoff ab, mit dem das Formteil in dem 3D-Druckverfahren hergestellt wird. Demzufolge kann das Formteil je nach verwendetem Material auf über 150°C oder auch nur auf eine Temperatur unterhalb von 50°C erwärmt werden. Die maximale Temperatur, auf die das Formteil erwärmt werden kann, ist in jedem Fall so einzustellen, dass sich das Formteil aufgrund der Temperatur nicht verformt. Zudem ist die maximale Temperatur, auf die das Formteil erwärmt wird, so einzustellen, dass im nachfolgenden Verarbeitungsprozess die Temperatur des Formteils aufgrund des in den Innenraum des druckdichten Behältnisses einströmenden Lösungsmitteldampfes weiter ansteigen kann, ohne dass es hierbei zu Verformungen des Formteils kommt.

Des Weiteren ist darauf zu achten, dass die Vorwärmtemperatur so gewählt wird, dass das Formteil nicht durch Wärme und Luftsauerstoff stark oxidiert. Um dennoch ein Erwärmen bei hohen Temperaturen zu ermöglichen, kann das Formteil alternativ in sauerstoffarmer Atmosphäre (z.B. Schutzgas oder Vakuum) erwärmt werden.

Alternativ zum Erwärmen des Formteils vor dem Einbringen des Formteils in das druckdichte Behältnis kann das Formteil auch nach dem Einbringen in das druckdichte Behältnis erwärmt werden, d.h. im druckdichten Behältnis erwärmt werden.

Hierzu kann in einem Schritt S0, der vor dem Schritt S1 ausgeführt wird, der Innenraum des druckdichten Behältnisses auf eine vorbestimmte Temperatur, beispielsweise 130°C erwärmt werden. Die Erwärmung des Innenraumes des druckdichten Behältnisses kann mit einer Heizeinrichtung, beispielsweise mittels Heizmanschetten durchgeführt werden. Das Erwärmen kann mittels eines Temperatursensors, der im Innenraum des druckdichten Behältnisses angeordnet ist, kontrolliert werden.

Nachdem der Innenraum die vorbestimmte Temperatur erreicht hat, kann das Formteil in den Innenraum des druckdichten Behältnisses eingebracht werden (Schritt S1). Das eingebrachte Formteil wird so auf eine bestimmte Temperatur erwärmt, wobei sich die Innentemperatur des Innenraums gleichzeitig etwas abkühlt, da das Formteil beim Erwärmen eine bestimmte Menge an Wärmeenergie aufnimmt bzw. das druckdichte Behältnis Wärme an die Umgebung abgibt. Beispielsweise kann sich der Innenraum des druckdichten Behältnisses auf etwa 108°C abkühlen, und das Formteil erwärmt sich auf etwa 108°C, vorzugsweise auf maximal 108°C.

Mit Hilfe der Heizeinrichtung kann bei Bedarf gewährleistet werden, dass die Innentemperatur nach dem Einbringen des Formteils in den Innenraum nicht unterhalb einer bestimmten Temperatur absinkt bzw. überhaupt nicht absinkt. Wird etwa der Innenraum auf 130°C erwärmt kann also gewährleistet werden, dass die Temperatur des Innenraumes nach dem Einbringen des Formteils bei annähernd 130°C bleibt oder nicht unterhalb von beispielsweise 108°C absinkt.

Alternativ kann der Schritt S0 auch nach dem Schritt S1 ausgeführt werden. D.h., dass nach dem Einbringen des Formteils in den Innenraum des druckdichten Behältnisses der Innenraum des druckdichten Behältnisses erwärmt wird, beispielsweise auf etwa 108°C. Damit wird auch das eingebrachte Formteil auf etwa 108°C erwärmt.

Nach dem Einbringen des Formteils wird im Innenraum des druckdichten Behältnisses ein Unterdruck, vorzugsweise ein weitgehendes Vakuum erzeugt (Schritt S2). Unterdruck bedeutet hierbei ein Druck unterhalb des Atmosphärendruckes. Im Zusammenhang mit der vorliegenden Erfindung bedeutet Vakuum ein Druck unter 300 mbar.

Vorteilhaft ist es, wenn das Erzeugen des Unterdruckes bzw. des Vakuums in dem Innenraum des druckdichten Behältnisses unmittelbar nach dem Einbringen des Formteils in den Innenraum erfolgt, um ein Vergilben oder anderweitiges Verfärben der Formteile während des Erwärmens zu verhindern. Es hat sich gezeigt, dass ein Vergilben der Formteile beim Erwärmen der Formteile verhindert werden kann, wenn diese keinem bzw. nahezu keinem Sauerstoff ausgesetzt sind. Demzufolge ist es vorteilhaft, unmittelbar nach dem Einbringen des Formteiles in das druckdichte Behältnis in dem druckdichten Behältnis einen Unterdruck bzw. ein Vakuum zu erzeugen, und zwar unabhängig davon, ob der Schritt S0 vor dem Schritt S1 oder nach dem Schritt S1 ausgeführt wird.

In einem Schritt S3 wird das in dem Lösungsmittelbehältnis gespeicherte Lösungsmittel auf eine vorbestimmte Lösungsmitteltemperatur erwärmt, beispielsweise auf 130°C. Das Lösungsmittelbehältnis ist vorzugsweise druckdicht ausgestaltet.

Es hat sich als besonders vorteilhaft herausgestellt, wenn die Menge an erwärmtem Lösungsmittel mehrere Liter, vorzugsweise mindestens 20 Liter, beträgt. Damit kann sichergestellt werden, dass ausreichend Lösungsmittel in geeigneter Temperatur für den Prozess zur Verfügung steht. Dies ermöglicht einen besonders stabilen und damit reproduzierbaren Prozess, welcher auch unabhängig von der zu bearbeiteten Anzahl an Formteilen bzw. deren Oberfläche durchgeführt werden kann, ohne dass dies Einfluss auf das Glättergebnis hat.

Das Erwärmen des Lösungsmittels in dem Lösungsmittelbehältnis kann beispielsweise mittels einer Manschetten- bzw. Mantelheizung oder direkt über Heizstäbe erfolgen.

Für viele Anwendungen hat sich eine Lösungsmitteltemperatur von über 100°C als besonders vorteilhaft erwiesen, da dadurch über den gesamten Prozess hinweg sichergestellt werden kann, dass eine ausreichende Temperaturdifferenz zwischen den zu glättenden Teilen und dem Lösemitteldampf besteht. Dadurch wird die Kondensation des Lösungsmittels an der Oberfläche sichergestellt. Gleichzeitig ist eine erhöhte Temperatur des Lösungsmittels ausschlaggebend für die Temperatur des Lösungsmittelkondensates, welche ihrerseits die Lösefähigkeit des Lösungsmittels und damit das Glättergebnis entscheidend beeinflusst.

Der Schritt S3 kann hierbei vor den Schritten S0 bis S2 oder parallel zu den Schritten S0 bis S2 durchgeführt werden, wobei lediglich gewährleistet sein muss, dass das Lösungsmittel vor der Durchführung des Schrittes S4 die vorbestimmte Lösungsmitteltemperatur erreicht hat. Dies kann mit Hilfe eines Temperatursensors in dem, vorzugsweise druckdichten, Lösungsmittelbehältnis geprüft werden.

Nachdem das Lösungsmittel die vorbestimmte Lösungsmitteltemperatur erreicht hat und der Innenraum des druckdichten Behältnisses bzw. das in den Innenraum eingebrachte Formteil die gewünschte Temperatur erreicht hat, wird in dem Schritt S4 das erwärmte Lösungsmittel in den einen Unterdruck aufweisenden Innenraum des druckdichten Behältnisses eingebracht. Dies kann beispielsweise durch Öffnen eines Ventils erfolgen, das den Innenraum des druckdichten Behältnisses von dem Innenraum des Lösungsmittelbehältnisses trennt.

Durch das Öffnen dieses Ventils und aufgrund des Druckunterschiedes zwischen dem Innenraum des druckdichten Behältnisses und dem Lösungsmittelbehältnis gelangt eine bestimmte Menge an Lösungsmittel in den gasleeren und aufgewärmten Innenraum des druckdichten Behältnisses und verdampft dort schlagartig. Alternativ hierzu kann bereits Lösungsmitteldampf in den gasleeren und aufgewärmten Innenraum des druckdichten Behältnisses gelangen. Die Menge an Lösungsmittel, welche in das druckdichte Behältnis gelangt, über die Druckdifferenz zwischen dem druckdichten Behältnis und dem Lösungsmittelbehältnis, den Öffnungswinkel und/oder den Öffnungsquerschnitt des Ventils gesteuert werden. In einer besonderen Ausgestaltung der Erfindung ist der Öffnungsquerschnitt über ein regelbares Ventil stufenlos einstellbar.

Ob Lösungsmitteldampf in den Innenraum gelangt oder ob Lösungsmittel in den Innenraum gelangt und dort schlagartig verdampft hängt letztlich von den Temperatur- und Druckverhältnissen in dem Innenraum und in dem Lösungsmittelbehältnis ab. Vorteilhaft ist es aber, wenn das Lösungsmittel bereits als Lösungsmitteldampf in den Innenraum gelangt. Hierbei ist es besonders vorteilhaft, wenn auch der Lösungsmittelbehälter einen Unterdruck, besonders bevorzugt ein weitgehendes Vakuum aufweist. Dadurch wird ein Verdampfen von höher siedenden Lösungsmitteln bei Temperaturen ermöglicht, die niedrig genug sind, um das Formteil, beispielsweise ein Formteil aus einem Polymer mit vergleichsweise niedrigem Schmelzpunkt, nicht zu zerstören. Für Diethylbenzol als Lösungsmittel hat sich beispielsweise ein Druck im Lösungsmittelbehältnis von 60 mbar bis 200 mbar bei einer Lösungsmitteltemperatur von etwa 120°C bis 160°C als vorteilhaft erwiesen. Damit kann auch für hochsiedende Lösungsmittel eine Dampftemperatur erreicht werden, die geeignet ist die Formteile zu bearbeiten, ohne dass die Formteile durch die thermische Belastung zerstört werden oder sich auflösen bzw. vollständig auflösen. Für bio-basierte Lösungsmittel hat sich beispielsweise ein Druck im Lösungsmittelbehältnis von 30 mbar bis 500 mbar bei einer Lösungsmitteltemperatur von etwa 50 °C bis 170 °C als vorteilhaft erwiesen. Damit kann auch für hochsiedende bio-basierte Lösungsmittel eine Dampftemperatur erreicht werden, die geeignet ist, die Formteile zu bearbeiten, ohne dass die Formteile durch die thermische Belastung zerstört werden oder sich auflösen bzw. vollständig auflösen. Der Unterdruck im Lösungsmittelbehälter bringt darüber hinaus auch den Vorteil eines sehr sicheren Prozesses mit sich, da ein Entweichen von Lösungsmittel durch den erzeugten Unterdruck nahezu ausgeschlossen ist und im Falle einer Undichtigkeit lediglich Luft angesaugt werden würde. Der Druck im Lösungsmittelbehältnis kann mit Hilfe eines Drucksensors überwacht werden.

Die Temperatur des Innenraumes des druckdichten Behältnisses und der in dem Innenraum erzeugte Unterdruck und die Lösungsmitteltemperatur sind so aufeinander abzustimmen, dass das in den Innenraum eingebrachte Lösungsmittel schlagartig verdampfen kann sofern nicht bereits Lösungsmitteldampf dem Innenraum des druckdichten Behältnisses zugeführt wird. Drücke im Innenraum des druckdichten Behältnisses von unter 15 mbar, vorzugsweise von unter 10 mbar haben sich als besonders vorteilhaft herausgestellt.

Für den Fall, dass das Lösungsmittel bereits in einem druckdichten Lösungsmittelbehälter verdampft wird, und insbesondere für den Fall, dass dies nur durch das Erzeugen eines Unterdruckes in dem Lösungsmittelbehältnis realisiert werden kann (wenn beispielsweise Diethylbenzol bei einer maximalen Lösungsmitteltemperatur von 140°C verdampfen soll oder wenn beispielsweise Limonen bei einer maximalen Lösungsmitteltemperatur von 140 °C verdampfen soll), ergibt sich durch den besonders niedrigen Druck von unter 10 mbar im Innenraum des druckdichten Behälters dennoch der technische Vorteil, dass ein ausreichend großes Druckgefälle (zwischen dem Innenraum des druckdichten Behältnisses und dem Innenraum des druckdichten Lösungsmittelbehälters) besteht, um das verdampfte Lösungsmittel effizient dem druckdichten Innenraum zuzuführen.

Für Lösungsmittel mit einer niedrigen Verdampfungstemperatur kann die Innenraumtemperatur des druckdichten Behältnisses niedriger gewählt werden und/oder in den Innenraum des druckdichten Behältnisses können niedrigere Unterdrücke erzeugt werden. Es hat sich jedoch gezeigt, dass sehr hohe Unterdrücke, etwa ein nahezu vollkommenes Vakuum die Verdampfung des eingebrachten Lösungsmittels begünstigen, insbesondere da, um ein Vergilben der eingebrachten Formteile beim Erwärmen der Formteile zu verhindern, ohnehin ein weitgehendes Vakuum erzeugt werden sollte.

Aufgrund der Temperaturdifferenz zwischen den in den Innenraum des druckdichten Behältnisses eingebrachten Formteilen und des in diesen Innenraum eingebrachten Lösungsmitteldampfes (die Formteile weisen zunächst eine niedrigere Temperatur auf als das eingebrachte Lösungsmittel) kondensiert der Lösungsmitteldampf an der Oberfläche des Formteils. Das an der Oberfläche des Formteils kondensierte Lösungsmittel löst die Oberfläche des Formteiles leicht an, wodurch Poren an der Oberfläche verschlossen und die Oberfläche dadurch geglättet wird. Wieviel Dampf an der Oberfläche des Formteils kondensiert hängt im Wesentlichen von der Temperaturdifferenz zwischen dem Formteil und dem eingebrachten Lösungsmitteldampf ab. Zudem ist die Menge des sich an der Oberfläche des Formteils bildenden Kondensats entscheidend für den Grad der Anlösung und damit für die effektiv bewirkte Glättung der Oberfläche.

Wichtig bei dem Verfahren ist daher, dass zum einen die richtige Dampftemperatur des Lösungsmittels erreicht wird, da bei zu niedrigen Temperaturen nicht ausreichend Dampf gebildet wird und dadurch die Oberfläche des Formteils nur unzureichend angelöst wird. Zudem kann sich bei zu niedrigen Dampftemperaturen zwar ein Lösungsmittelkondensat an der Oberfläche des Formteils absetzen, die Temperatur des Kondensats kann aber zu niedrig sein, um das Anlösen der Oberfläche zu gewährleisten. Daher ist es für viele Formteilmaterial/Lösungsmittel-Kombinationen besonders vorteilhaft, wenn das Lösungsmittel auf eine Temperatur von über 50 °C erwärmt wird.

Zu hohe Dampftemperaturen können hingegen ein zu starkes Anlösen der Oberfläche des Formteils bewirken, was zu einer Geometrieänderung des Formteiles führen kann, oder wodurch eine Tropfen- bzw. Nasenbildung unterstützt wird. Ferner kann ein zu starkes Anlösen der Oberfläche bei der anschließenden Vakuumtrocknung zu einer Bläschenbildung an der Oberfläche führen.

Zum anderen müssen die in den Innenraum eingebrachten Formteile vor dem Einbringen des erwärmten Lösungsmittels bzw. vor dem Einbringen des Lösungsmitteldampfes eine bestimmte Temperatur aufweisen, damit die Temperaturdifferenz zwischen dem Formteil und dem Lösungsmitteldampf das Erzeugen einer bestimmten Menge an Kondensat an der Oberfläche des Formteiles bewirkt. Andererseits darf die Temperaturdifferenz zwischen dem Formteil und dem Lösungsmitteldampf nicht zu groß sein, damit sich nicht zu viel Kondensat an der Oberfläche des Formteils bildet, was ein zu starkes Anlösen der Oberfläche des Formteils bewirken kann.

Letztlich müssen die Parameter (Innentemperatur des Innenraumes des druckdichten Behältnisses bzw. Temperatur des Formteils, Temperatur des Lösungsmittels und Druck im Innenraum des druckdichten Behältnisses und gegebenenfalls Druck im Innenraum des Lösungsmittelbehälters) in Abhängigkeit vom verwendeten Lösungsmittel und vom Material des Formteiles so aufeinander abgestimmt werden, dass sich an der Oberfläche des zu behandelnden Formteiles eine bestimmte Menge an Lösungsmittelkondensat bildet, die den gewünschten Glättungseffekt bewirkt. Die Temperatur des Formteils ist hierbei in jedem Fall geringer als die Temperatur des Lösungsmittels bzw. des Lösungsmitteldampfes. Gleichzeitig ist der Druck im Innenraum des druckdichten Behältnisses geringer als der Druck im Innenraum des Lösungsmittelbehälters, wobei beide einen Unterdruck oder ein weitgehendes Vakuum aufweisen können.

Durch das Einbringen des Lösungsmittels in den, den Unterdruck aufweisenden, Innenraum des druckdichten Behältnisses und die schlagartige Verdampfung des Lösungsmittels bzw. durch das Einbringen des Lösungsmitteldampfes in den, den Unterdruck aufweisenden, Innenraum des druckdichten Behältnisses steigt die Temperatur im Innenraum des druckdichten Behältnisses stetig an. Durch das Kondensieren des Lösungsmitteldampfes wird eine Druckreduzierung im Innenraum des druckdichten Behältnisses bewirkt, wodurch stetig weiteres Lösungsmittel in den Innenraum eingebracht wird und schlagartig verdampft bzw. stetig weiterer Lösungsmitteldampf in den Innenraum eingebracht wird.

Das Ventil bleibt solange offen, bis im Innenraum des druckdichten Behältnisses eine vorbestimmte Temperatur erreicht ist. Die zu erreichende Temperatur im Innenraum des druckdichten Behältnisses (Solltemperatur bzw. vorbestimmte zweite Temperatur) wird so gewählt, dass sich an der Oberfläche des Formteiles nur so viel Kondensat bildet, das für den gewünschten Glättungseffekt ausreichend ist.

Wird das Ventil zu lange offen gehalten, kann die Temperatur im Innenraum des druckdichten Behältnisses über die gewünschte Solltemperatur ansteigen, was zu einer zu großen Menge an Kondensat an der Oberfläche des Formteiles und damit zu einem zu starken Anlösen der Oberfläche des Formteiles führen kann. Durch ein zu starkes Anlösen der Oberfläche des Formteiles durch das Lösungsmittelkondensat können sich bei der anschließenden Vakuumtrocknung (Schritt S5) Materialblasen bilden, da das sich an der Oberfläche gebildete Lösungsmittel-Kunststoffgemisch anfangen kann zu kochen. Beim gleichzeitigen Aushärten der Oberfläche können sich dann Blasen oder Krater bilden.

Es hat sich als vorteilhaft erwiesen, wenn das Ventil für eine Zeit zwischen 1 s und 600 s offen gehalten wird. Besonders vorteilhaft ist eine Ventilöffnungszeit von 5 s bis 300 s. Allerdings ist zu bedenken, dass die Ventilöffnungszeit von der Ausführung des Ventils abhängt und gegebenenfalls die Ventilöffnungszeit an den Ventildurchmessers angepasst werden muss.

Als vorteilhaft hat sich herausgestellt, die in das druckdichte Behältnis eingebrachten Formteile während der Bedampfungsphase im Innenraum zu rotieren oder alternativ die im Innenraum starr angeordneten Formteile zusammen mit dem Innenraum bzw. mit dem druckdichten Behältnis zu rotieren. Dadurch kann eine Tropfenbildung erheblich reduziert werden.

Das Vermeiden bzw. die erhebliche Reduzierung der Tropfenbildung kann alternativ oder zusätzlich auch mittels einer in dem Innenraum des druckdichten Behältnisses angeordneten Verwirbelungseinheit, etwa ein Ventilator, bewirkt werden, die den eingebrachten Lösungsmitteldampf verwirbelt. Ein solches Verwirbeln des eingebrachten Lösungsmitteldampfes kann auch durch den Druckunterschied zwischen dem Innenraum des Lösungsmittelbehältnisses und dem Innenraum des druckdichten Behältnisses bewirkt oder unterstützt werden.

Das Vorsehen einer Verwirbelungseinheit hat zudem den Vorteil, dass der Lösungsmitteldampf zuverlässig auch an verdeckt oder innenliegende Oberflächen des Formteils gelangt.

Nach dem Einbringen des Lösungsmittels bzw. des Lösungsmitteldampfes in den Innenraum des druckdichten Behältnisses kann (optional) eine vorbestimmte Haltezeit H (Schritt S4a) vorgesehen sein, während der weder Lösungsmitteldampf dem Innenraum des druckdichten Behältnisses zugeführt noch Lösungsmitteldampf aus dem Innenraum des druckdichten Behältnisses abgesaugt wird. Während dieser Haltezeit befindet sich das Formteil in einer Umgebung, die sich unmittelbar nach dem Einbringen des Lösungsmittels bzw. des Lösungsmitteldampfes in den Innenraum des druckdichten Behältnisses einstellt. Mittels der Heizeinrichtung kann gewährleistet werden, dass die Temperatur im Innenraum des druckdichten Behältnisses während der Haltezeit weitgehend konstant bleibt. Durch das Vorsehen dieser Haltezeit kann ein noch besserer Glättungseffekt erzielt werden.

Es hat sich als vorteilhaft herausgestellt, wenn der Lösungsmitteldampf im Innenraum des druckdichten Behältnisses auch während der Haltezeit verwirbelt wird, beispielsweise mit der vorstehend genannten Verwirbelungseinheit. Dadurch kann auch während der Haltezeit vermieden werden, dass sich an der Oberfläche der Formteile Tropfen oder Blasen bilden.

Durch das Vorsehen der Haltezeit und insbesondere in Kombination mit dem Verwirbeln des Lösungsmitteldampfes während der Haltezeit kann zudem ein noch gleichmäßigeres Anlösen der Oberfläche des Formteils gewährleistet werden.

Nach dem Einbringen des erwärmten Lösungsmittels in dem Schritt S4 bzw. nach der Haltezeit H (Schritt S4a) werden in dem Schritt S5 die Formteile getrocknet. In einer Ausgestaltung der Erfindung können die Formteile zum Trocknen aus dem druckdichten Behältnis herausgenommen werden.

In einer alternativen Ausgestaltung der Erfindung, die sich als vorteilhaft herausgestellt hat, ist es vorgesehen, die Formteile in dem den Unterdruck aufweisenden Innenraum des druckdichten Behältnisses zu trocknen. Dies hat den Vorteil, dass der Trocknungsprozess bei Unterdruck bzw. Vakuum erheblich schneller von statten geht. Besonders vorteilhaft ist es, wenn unmittelbar vor dem Trocknen der Formteile in einem Schritt S4.1 der sich im Innenraum des druckdichten Behältnisses befindliche Lösungsmitteldampf und gegebenenfalls das sich an der Innwandung gebildete und am Boden des Innenraumes angesammelte Lösungsmittelkondensat abgesaugt wird. Das Absaugen von Lösungsmittel kann auch während des gesamten Trocknungsprozesses erfolgen. Dies hat den Vorteil, dass bereits kondensiertes Lösungsmittel direkt ablaufen kann und nicht erst wieder verdampft werden muss, ehe es aus der Kammer entfernt wird. Dadurch kann das Formteil innerhalb weniger Sekunden getrocknet werden.

Nach dem Trocknen kann (optional) eine weitere vorbestimmte Haltezeit H (Schritt S5a) vorgesehen sein. Während dieser weiteren Haltezeit befindet sich das Formteil in einer Umgebung, die sich unmittelbar nach dem Trocknen bzw. nach dem Absaugen des Lösungsmitteldampfes einstellt. Mittels der Heizeinrichtung kann gewährleistet werden, dass die Temperatur im Innenraum des druckdichten Behältnisses während dieser weiteren Haltezeit weitgehend konstant bleibt. Durch das Vorsehen dieser weiteren Haltezeit können Lösungsmittelrückstände an der Oberfläche des Formteils reduziert werden.

Der abgesaugte Lösungsmitteldampf bzw. Lösungsmittelkondensat können dann gegebenenfalls gefiltert und gereinigt werden und anschließend in das Lösungsmittelbehältnis zurückgeführt werden. Damit kann das Lösungsmittel in einem Kreislauf verwendet werden. Dies bringt den technischen Vorteil mit sich, dass während des Prozesses keine entsorgungspflichtigen Materialien oder andere Abfälle anfallen. Somit handelt es sich bei dem Prozess um ein ressourcenschonendes, effizientes Verfahren. Zudem wird durch das Absaugen des Lösungsmittels gewährleistet, dass der Benutzer nie in direkten Kontakt mit dem Lösungsmittel kommt.

Ein besonders effizientes Vakuumtrocknen (bzw. Unterdrucktrocknen) kann erzielt werden, wenn das Erzeugen des Unterdruckes / Vakuums in der druckdichten Kammer durch ein kontrolliertes Einströmen eines Transportgases unterbrochen wird. In einer Ausgestaltung der Erfindung kann ein solches Einströmen des Transportgases zyklisch durchgeführt werden, d.h. das Erzeugen des Unterdruckes / Vakuums wird zyklisch unterbrochen. Dies bringt den technischen Vorteil mit sich, dass auch Vakuumpumpen mit geringerer Saugleistung die Lösungsmittelrückstände vollständig aus dem Innenraum des druckdichten Behälters entfernen können. Um durch den Druckanstieg im Innenraum des druckdichten Behälters, der durch das Zuführen des Transportgases bewirkt wird, kein erneutes Kondensieren des Lösemittels an der Oberfläche der Formteile zu bewirken, ist es hierbei besonders vorteilhaft, wenn die einströmende Menge an Transportgas kontrolliert wird und der Druck in dem druckdichten Innenraum dabei nicht zu stark ansteigt. Ein Druckanstieg von 8 mbar auf etwa zwischen 50 mbar und 100 mbar und ein anschließendes erneutes Evakuieren auf 8 mbar oder weniger hat sich hierbei als besonders vorteilhaft und effizient erwiesen. Für den Fall, dass als Transportgas ein Sauerstoffhaltiges Gas, etwa Luft verwendet wird, bringt das "niedrighalten" des Druckes (d.h. der Druck wird auf einen Wert unterhalb von 300 mbar, vorzugsweise unterhalb von 100 mbar gehalten) darüber hinaus den technischen Vorteil, dass ein Vergilben der Teile durch Oxidation verhindert wird. Dieses Risiko bestünde für den Fall, dass sehr viel Sauerstoff während des Trocknungsvorganges in die Kammer eindringt, da die Formteile zu diesem Zeitpunkt immer noch eine erhöhte Temperatur aufweisen und damit, etwa im Falle von Formteilen aus Polyamid, sehr oxidationsempfindlich sind.

Nach dem Vakuumtrocknen des Formteiles kann dieses in einem letzten Schritt aus dem druckdichten Behältnis entnommen werden, wobei vor der Entnahme des Formteiles der Innenraum des druckdichten Behältnisses optional auf eine bestimmte Temperatur abgekühlt werden kann. Vor Allem im Falle eines Vakuumtrocknens direkt vor der Entnahme der Formteile ist das zuvor beschriebene effiziente Vakuumtrocknen unter Zuführung eines Transportgases gegenüber einem Trocknen ohne Zuführung eines Transportgases zu bevorzugen.

Die Schritte S4, S5 und gegebenenfalls S4.1, S4a und S5a werden zusammen als ein Zyklus (Verarbeitungszyklus) bezeichnet.

In einer Ausgestaltung der Erfindung kann es vorgesehen sein, diesen Zyklus, d.h. die Schritte S4 und S5 sowie gegebenenfalls die Schritte S4.1, S4a und S5 mehrfach zu wiederholen. Dies hat sich insbesondere dann als vorteilhaft herausgestellt, wenn durch das Anlösen der Oberfläche, das durch das Einbringen des Lösungsmitteldampfes in dem Schritt S4 bewirkt wird, kein ausreichender Glättungseffekt erzielt werden kann. Dies kann etwa dann der Fall sein, wenn aufgrund des Formteilmaterials und des verwendeten Lösungsmittels nur sehr kurze Bedampfungszeiten möglich sind, ohne das Formteil zu beschädigen.

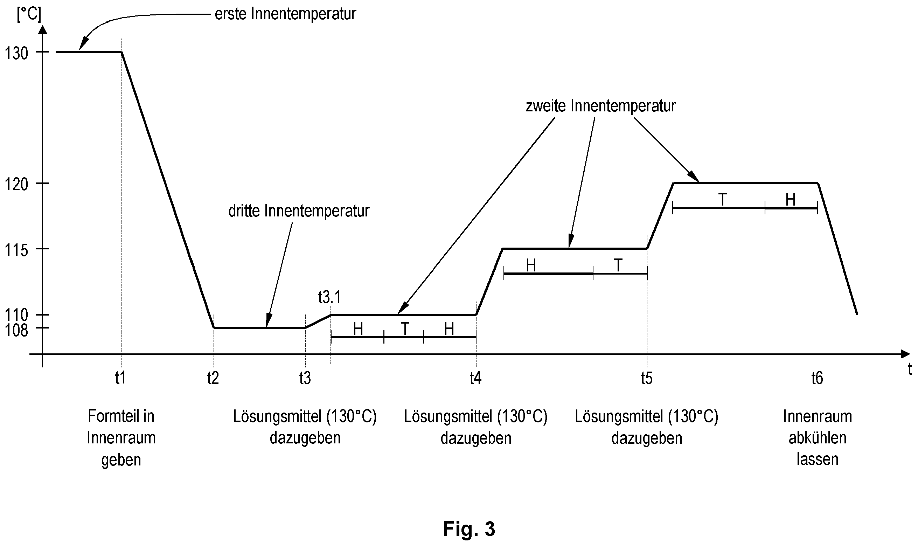

Nach dem ersten Zyklus, d.h. nach dem erstmaligen Bedampfen und dem erstmaligen Vakuumtrocknen der Formteile ist die Temperatur des Formteiles höher als zu Beginn des ersten Zyklus, da durch das Einbringen des Lösungsmitteldampfes die Temperatur im Innenraum des druckdichten Behältnisses und damit auch die Temperatur des Formteiles ansteigt. Das bedeutet, dass beim nächsten Zyklus solange Dampf dem Innenraum des druckdichten Behältnisses zugeführt werden muss, bis der Innenraum bzw. das Formteil eine Temperatur erreicht, bei der sich an der Oberfläche des Formteiles genügend Kondensat absetzt, um den gewünschten Glättungseffekt zu erzielen (beispielhaft in Fig. 3 gezeigt). Da die Temperatur des Formteiles zu Beginn des zweiten Zyklus höher ist als zu Beginn des ersten Zyklus (sofern das Formteil zwischen zwei Zyklen nicht gekühlt wird) ist die Temperaturdifferenz zwischen der Temperatur des Formteiles und der Temperatur des Lösungsmittels nicht mehr groß genug, um bei Zugabe der gleichen Lösungsmittelmenge wie in dem ersten Zyklus genügend Kondensat an der Oberfläche des Formteiles zu erzeugen.

Dieser Zyklus kann im Prinzip beliebig oft wiederholt werden. Allerdings sind der Anzahl von Wiederholungen dort Grenzen gesetzt, wo aufgrund der Wiederholungen die Temperatur des Formteiles einen Wert erreicht, bei dem die Formteile zerstört würden. Ein beispielhafter Temperaturverlauf der Innentemperatur des Innenraumes des druckdichten Behältnisses wird mit Bezug auf Fig. 3 bis Fig. 7 näher beschrieben.

Um die geringere Temperaturdifferenz zwischen dem Formteil und dem eingebrachten Lösungsmittel nach jedem Zyklus auszugleichen, kann es auch vorgesehen sein, das Lösungsmittel nach jedem Zyklus entsprechend weiter zu erwärmen, um für den nächsten Zyklus wieder die gewünschte Temperaturdifferenz zwischen der Temperatur des Formteils und der Temperatur des Lösungsmittels zu erreichen.

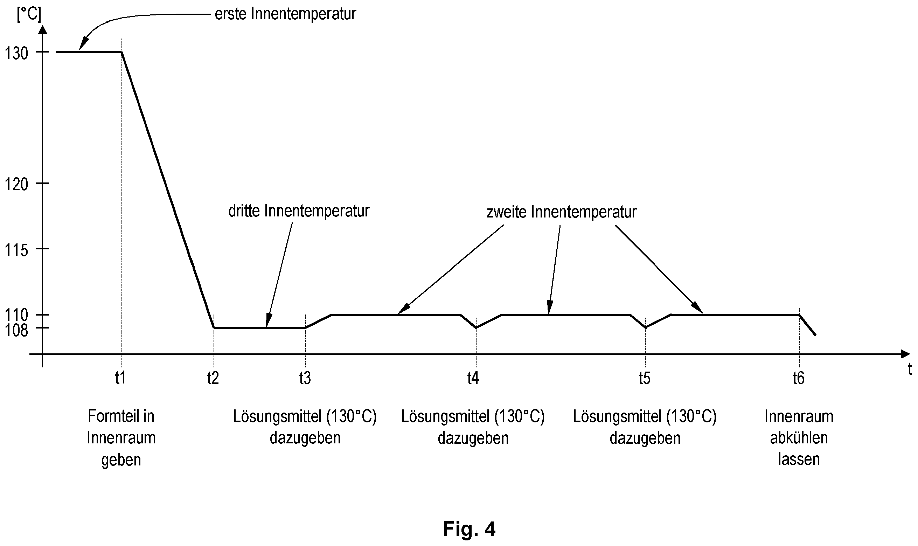

In einer alternativen Ausgestaltung des Verfahrens kann vor dem Einbringen des erwärmten Lösungsmittels in dem nächsten Zyklus die Temperatur des Innenraumes des druckdichten Behältnisses abgesenkt werden, vorzugsweise soweit, bis die gewünschte Temperaturdifferenz zwischen dem Formteil und dem einzubringenden Lösungsmittel wieder erreicht wird. Beispielsweise kann die Temperatur des Innenraumes auf jenen Wert abgesenkt werden, bei dem in dem ersten Zyklus Lösungsmittel in den Innenraum eingebracht wurde (wie in Fig. 4 gezeigt). Das Abkühlen kann hier bereits indirekt durch die Verdampfungskühle während des Erzeugens des Unterdruckes bzw. des Vakuums erzielt werden. Bei dieser alternativen Ausgestaltung des Verfahrens kann das Formteil beliebig oft bedampft werden, d.h. es können beliebig viele Zyklen wiederholt werden. Es hat sich allerdings gezeigt, dass je nach Material des Formteiles und je nach verwendetem Lösungsmittel zwischen drei und sechs Zyklen ausreichend sein können, um ein optimales Glättungsergebnis zu erreichen.

Das erfindungsgemäße Verfahren eignet sich insbesondere für Formteile, die im SLS-Verfahren (Selektives Lasersintern), MJF-Verfahren (Multijet Fusion), HSS-Verfahren (High Speed Sintering), FDM-Verfahren (Fused Deposition Modeling), STEP (Selective Thermopastic Electrophotographic Process) und SLA-Verfahren (Stereolithografie) hergestellt wurden. Besonders vorteilhaft ist das erfindungsgemäße Verfahren für Formteile, die in einem pulverbasierten Schichtbauverfahren, bei dem einzelne Schichten miteinander verschmolzen werden, etwa das SLS-, das MJF- oder das HSS-Verfahren, hergestellt wurden, da bei diesen pulverbasierten Verfahren die Oberfläche besonders rau ist und mit Poren versetzt ist. Darüber hinaus ist das erfindungsgemäße Verfahren besonders vorteilhaft für das FFF-Verfahren (Fast Filament Fabrication) und das FDM-Verfahren (Fused Deposition Molding), da bedingt durch den Durchmesser des verwendeten Filaments eine sehr raue Oberfläche senkrecht zur Druckrichtung entsteht.

Für die Herstellung der Formteile können Polymere, insbesondere nachfolgend genannte Materialien verwendet werden, die sich für das erfindungsgemäße Glätten der Oberfläche der daraus hergestellten Formteile besonders gut eignen:
Für die Herstellung (Drucken) des Formteils kann das Material ausgewählt werden aus der Gruppe umfassend thermoplastische Kunststoffe und lichthärtende Kunststoffe.

Als Kunststoffe als reine Polymere, Co-Polymere sowie Gemische hiervon zu verstehen. Darunter fallen Kunststoffe aus der Gruppe umfassend Polyester, Polyamide, Polyurethane, Polyketone, Polyimide, Polyimine, Polysulfide, Polysulfone, Polyolefine, Polycarbonate, Polyacrylnitrile, Polyphthalate, Polythioether, Kautschuke, Latex, Polyacrylate, und Cyanatester.

Unpolare, halogenfreie Lösungsmittel besonders für unpolare Kunststoffe wie Polyolefine (beispielsweise Polypropylen, Polyethylen, Polymethylpenten, Polybutylen), Polyketone (beispielsweise Polyethyletherketone, Polyaryletherketone, Polyetherketonketone), Polystyrole, Polycarbonate, und Polysulfone geeignet, da diese Kunststoffe nicht ausreichend mit polaren Lösungsmitteln geglättet werden können.

Es können aber auch andere Materialien verwendet werden, sofern sie sich für ein 3D-Druckverfahren eignen und sich die Oberfläche der damit hergestellten Formteile mittels eines Lösungsmitteldampfes gemäß dem erfindungsgemäßen Verfahren anlösen lässt.

Als Lösungsmittel haben sich nachfolgend genannte unpolare, halogenfreie Lösungsmittel (zu denen im Sinne der vorliegenden Erfindung auch Hochsieder zählen) als vorteilhaft herausgestellt, wobei auch andere hier nicht genannte unpolare, halogenfreie Lösungsmittel verwendet werden können:
Das unpolare Lösungsmittel kann ausgewählt werden aus der Gruppe umfassend
- un-, einfach und mehrfach substituierte Benzole (beispielsweise Benzol, Alkylbenzole, insbesondere Toluol, Xylole, Monoethylbenzol, Diethylbenzole, Triethylbenzole, Methyl-ethylbenzole, Diisooctylphthalat, Dimethylanilin, Tetrahydronaphthalin),
- un-, einfach und mehrfach substituierte offenkettige Alkane (beispielsweise Butan, Pentan, Hexan, Heptan),
- un-, einfach und mehrfach substituierte offenkettige Alkene (beispielsweise Butene, Pentene, Hexene, Heptene),
- un-, einfach und mehrfach substituierte cyclische, aliphatische Kohlenwasserstoffe (beispielsweise Cyclohexan, Decaline, Cuban, Dicyclopentadien, Methylcyclohexan, Limonen),
- Carbonsäureester (beispielsweise Essigsäurebutylester, Dioctyladipat, Acrylsäureester, Ethylbutyrat),
- un-, einfach und mehrfach substituierte offenkettige Ether (beispielsweise Dimethylether, Diethyleter, Diisopropylether, Methylispropylether, Diphenylether),
- un-, einfach und mehrfach substituierte cyclische Ether (beispielsweise Tetrahydrofuran (THF), Dioxan, Furfural),
- un-, einfach und mehrfach substituierte Ketone (beispielsweise Biisobutylketon), und
- Kombination bzw. Gemische hiervon.

Durch das Verfahren, welches bevorzugt unter Unterdruck stattfindet, können unpolare, halogenfreie entzündbare Lösungsmittel eingesetzt werden. Als vorteilhaft haben sich Lösungsmittel erwiesen, welche einen Flammpunkt über 40 °C aufweisen. Besonders vorteilhaft sind Lösungsmittel mit einem Flammpunkt über 52 °C. Die Erfindung ist allerdings nicht auf diese Lösungsmittel beschränkt, da eine Explosion auch durch eine inerte Umgebung z.B. Stickstoff, verhindert werden kann.

Unter dem Gesichtspunkt der Entflammbarkeit haben sich Lösungsmittel aus der folgenden Liste als vorteilhaft erwiesen: o-,m-,p-Diethylbenzol, Trimethylbenzol, Triethylbenzol, Ethyltoluene, Decalin, Tetrahydronaphthalin Diphenylether, Ethylbutyrat, Furfural und Limonen.

Unter diesen Lösungsmitteln besonders vorteilhaft zu nennen sind unter der Berücksichtigung der Gesundheitsgefährdung dieser Stoffe folgende Lösungsmittel: o-, m-, p-Diethylbenzol, Hemellitol (1,2,3-Trimethylbenzol), 1,2,4-Triethylbenzol, 1,3,5-Triethylbenzol, Diphenylether, Ethylbutyrat und Limonen.

Als besonders vorteilhaft haben sich hierbei Lösungsmittel erwiesen, die für die Bearbeitung von Kunststoffen für Lebensmittel zugelassen sind (beispielsweise nach der Verordnung (EU) Nr. 10/2011 der Kommission vom 14. Januar 2011 über Materialien und Gegenstände aus Kunststoff, die dazu bestimmt sind, mit Lebensmitteln in Berührung zu kommen), da diese Anwendungen in besonderem Maße von einer geglätteten Oberfläche der Formteile profitieren. Erfindungsgemäß geglättete Oberflächen sind wasserabweisend und unterbinden damit ein mögliches Keimwachstum effizient. Zu dieser Klasse von Lösungsmitteln zählen unter anderem p-Cymol und Limonen.

Die Verwendung von p-Cymol und Diethylbenzol bringt darüber hinaus den Vorteil, dass eine Verbreitung des Lösungsmittels unterbunden wird und eine effiziente Entsorgung von etwaigem, austretendem Lösungsmittel durch Handhabungsfehler einfach möglich, da es sich um schwer-flüchtige Substanzen handelt.

Als Lösungsmittel haben sich auch nachfolgend genannte bio-basierte Lösungsmittel (zu denen im Sinne der vorliegenden Erfindung auch Hochsieder, sowie Verbindungen, welche bisher nicht als Lösungsmittel eingesetzt werden, zählen) als vorteilhaft herausgestellt, wobei auch andere hier nicht genannte bio-basierte Stoffe als Lösungsmittel verwendet werden können:
Zur Gruppe der biobasierten Lösungsmittel gehören insbesondere Terpene und Terpenoide (sauerstoffhaltige Terpen-Derivate). Terpene und Terpenoide bieten gegenüber halogenierten Lösungsmitteln und anderen synthetischen Standard-Industrielösungsmitteln mehrere Vorteile. Terpene und Terpenoide sind meist biologischen Ursprungs (Naturstoffe) und biologisch abbaubar. Die biologische Abbaubarkeit ist besonders im Vergleich zu biopersistenten und treibhausschädigenden Halogenkohlenwasserstoffen ein Vorteil. Zusätzlich ist für viele Terpene dadurch eine hohe Verfügbarkeit und ein ökonomischer Vorteil gegeben (z. B. Limonene aus industriellen Orangenschalen-Abfällen, Terpinene aus Nadelbäumen). Im Gegensatz zu den meisten cyclischen und acyclischen Kohlenwasserstoffen weisen Terpene eine sehr geringe Toxizität auf und werden teils als pharmakologisch wertvolle Substanzen in Medizinprodukten eingesetzt (z. B. 1,8-Cineol bei Atemwegserkrankungen). Viele Terpene und Terpenoide werden zudem als Geruchs- und Aromastoffe verwendet.

Der Begriff Terpen umfasst eine große Menge an chemischen Verbindungen, die sich formal von Isopren ableiten. Als Lösungsmittel können folgende Terpene und Terpenoide verwendet werden:
- Acyclische Monoterpene, insbesondere Myrcen (7-Methyl-3-methylen-1,6-octadien), Ocimen (3,7-Dimethyl-1,3,6-octatrien), Cosmen, Linalool, Nerol, und Lavandulol
- Cyclische Monoterpene, insbesondere p-Menthan, p-Cymol, β-Phellandren, α-Phellandren, D-Limonen, L-Limonen, Dipenten (Racemisches Gemisch), α-Terpinen, γ-Terpinen, Terpinen (Stoffgemisch), Pinene (α-Pinen, β-Pinen sowie δ-Pinene), Pinan, Menthen, Camphen, Isobornylan, Isocamphan, Bornan, δ-Terpinen (Terpinolen), Sabinen, α-Thujen, β-Thujen, Caran, Carene (3-Caren, 2-Caren), Fenchan, α-Fenchen, und β-Fenchen
- Diterpene, insbesondere Neocembren (Cembrene A)
- Sesquiterpene, insbesondere Valencene
- Terpenoide, insbesondere 1,8-Cineol, 1,4-Cineol, cis-(+)-Limonen-1,2-oxid, trans-(+)-Limonen-1,2-oxid, Limonen-1,2:8,9-dioxide (Gemisch), Thymol, α - Pinenoxid, und β -Pinenoxid
- Monoterpen-Ketone und Monoterpen-Aldehyde, etwa D-Campher, L-Campher, Carvon, Nopionon, Norcampher, und Citronellal
- Monoterpen-Alkohole, etwa Menthol, Isopulegol, Terpineole (α-, β-, γ- und δ-Terpineol), 4-Terpinenol (Terpinen-4-ol), *trans*-*p*-Menthan-8-ol, Carvacrol, Borneole, Geraniol, und Lavandulol
- Monoterpene mit Heteroatomen wie*p*-Menth-1-en-8-thiol
- Terpenoidester, etwa Linalylacetat, Geranylacetat, Lavandulolacetat, Geraniolbutyrat

Die genannten Verbindungen können als Reinstoffe oder als Bestandteil von Mischungen eingesetzt werden. Auch Mischungen den genannten Verbindungen untereinander oder natürliche Stoffmischungen mit natürlicher Komponentenverteilung, wie z.B. Fraktionen von Eukalyptusöl, sind möglich.

Ebenso eignen sich Naturstoffe und bio-basierte Stoffe, die nicht zur Gruppe der Terpene gehören. Insbesondere aromatische Verbindungen wie z. B. Alkylphenole aus Lignin eignen sich als Lösungsmittel für das erfindungsgemäße Verfahren. Beispiele für solche Verbindungen sind 1-Phenylethanol, Guajacol, 4-Methylguaiacol, 4-Ethylguaiacol, 4-Methoxy-α-methylbenzylalkohol, Salicylsäuremethylester, Phenylpropanoide (Anethol, Apiol, Zimtaldehyd, Dillapiol, Estragol), Phenylpropene (Eugenol, Safrol, Myristicin, Elemicin, Estragol), Benzoesäuremethylester, Benzoesäureethylester, Vanillin, Anisol, Benzaldehyd, Phenethylalkohol, Essigsäurebenzylester, Anisolacetat, Carvacrol, Essigsäurecinnamylester, und Isoeugenol.

Weitere geeignete bio-basierte Verbindungen sind:
- Zyklische und azyklische Kohlensäureester (Ethylencarbonat, Propylencarbonat, Kohlensäuredimethylester, Kohlensäurediethylester, Kohlensäurediphenylester)
- Furan-basierte Ether (Furane, 2-Amylfuran, Tetrahydrofurane, besonders 2-Methyltetrahydrofuran, Tetrahydro-2-methyl-3-furanon)
- Michsäureester, besonders Milchsäureethylester und Milchsäuremethylester
- Bernsteinsäurediethylester
- Brenztraubensäurealkylester (besonders Ethylpyruvat)
- Ethylenglykoldiacetat
- Essigsäurepentylester, Essigsäureisopentylester
- Acetessigester
- Lävulinsäure
- Lävulinsäureethylester
- Acetaldehyddiethylacetal
- Methylisohexenylketone
- 2-(Butyryloxy)propionsäurebutylester
- Buttersäurehexylester
- Isovaleriansäure-2-methylbutylester
- Lactone (δ-Decalacton, γ-Decalacton, γ-Octalactone, γ-Valerolacton, δ-Dodecalacton, δ-Nonalactone, δ-Tetradecalactone, γ-Dodecalactone, γ-Hexalactone, γ-Nonanolacton, γ-Valerolactone)

Als besonders vorteilhaft haben sich bio-basierte Lösungsmittel erwiesen, die für die Bearbeitung von Kunststoffen für Lebensmittel zugelassen sind (beispielsweise nach der Verordnung (EU) Nr. 10/2011 der Kommission vom 14. Januar 2011 über Materialien und Gegenstände aus Kunststoff, die dazu bestimmt sind, mit Lebensmitteln in Berührung zu kommen), da diese Anwendungen in besonderem Maße von einer geglätteten Oberfläche der Formteile profitieren. Erfindungsgemäß geglättete Oberflächen sind wasserabweisend und unterbinden damit ein mögliches Keimwachstum effizient. Zu dieser Klasse von Lösungsmitteln zählen unter anderem 1,8-Cineol, Limonene, Terpinene und Terpineole.

In einer Ausgestaltung der Erfindung können dem bio-basierten Lösungsmittel Zusatzstoffe zugegeben werden. Bei den erfindungsgemäßen Zusatzstoffen handelt es sich um ein oder mehrere Antioxidantien, Hitze-Stabilisatoren und Polymerisationsinhibitoren. Bevorzugt werden sie in Konzentrationen zwischen je 5 ppm und 4000 ppm dem bio-basierten Lösungsmittel zugesetzt.

Geeignete Antioxidantien sind vorzugsweise sterisch gehinderte und nicht flüchtige Phenolverbindungen, wie 2,6-Di-tert-butyl-4-methylphenol (BHT), 1,3,5-Trimethyl-2,4,6-tris(3,5-di-tert-butyl-4-hydroxybenzyl)benzol, Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thio-diethyl-bis[3-(3,5-di-tert-butyl-4-hydroxyphenyl)propionat]. Weiterhin können sterisch gehinderte Amine (HALS) wie Diarylamine (beispielsweise 4,4-Bis(a,a-dimethylbenzyl)diphenylamin) oder Verbindungen, die auf Tetramethylpiperidin basieren (beispielsweise Bis(2,2,6,6-tetramethyl-4-piperidyl)sebacat), eingesetzt werden. Insbesondere organische Phosphite und Phosphonite wie beispielsweise Tris(2,4-di-tert-butylphenyl)phosphit, Bis(2,6-di-tert-butyl-4-methylphenyl)pentaerythritol-diphosphit, 3,9-Bis(octadecyloxy)-2,4,8,10-tetraoxa-3,9-diphosphaspiro[5.5]undecan und Tetrakis(2,4-di-tert-butylphenyl)[1,1-biphenyl]-4,4'-diylbisphosphonit können eigenständig oder als Kombinationen mit anderen Stabilisatoren verwendet werden. Besonders wirksam sind Kombinationen aus Phenol-basierten Verbindungen (primäre Antioxidantien) mit Phosphor-basierten Verbindungen (sekundäre Antioxidantien). Weitere mögliche Additive mit stabilisierender Wirkung sind unter anderem 2,2-(2,5-thiophendiyl)bis(5-tert-butylbenzoxazol), Phenothiazin, Hydrochinone, Hydrochinonether, Quinonalkyde und Nitroxylverbindungen sowie Mischungen davon, Benzoquinone, Kupfersalze, Zinksalze, Calcium-Stearat, Brenzcatechine, Cresole, Nitrobenzol und Benzotriazole.

Da die Stabilisatoren nicht mit dem bio-basierten Lösungsmittel verdampfen, sondem eine deutlich höhere Siede- bzw. Zersetzungstemperatur aufweisen, kann das bio-basierte Lösungsmittel einfach von den Zusätzen getrennt werden. Damit kann beispielsweise im Falle eines Lösungsmitteltausches das bio-basierte Lösungsmittel getrennt von den Stabilisatoren entsorgt werden.

Gleichzeitig kommt das zu behandelnde Formteil nur mit dem Dampf des bio-basierten Lösungsmittels, nicht aber mit den Zusätzen in Kontakt. Dies ist besonders vorteilhaft, wenn für die Bearbeitung des Formteils Lösungsmittel verwendet werden, welche für die Bearbeitung von Kunststoffen mit Lebensmittelkontakt geeignet sind.

Vor der Behandlung der Oberfläche eines in einem 3D-Druckverfahren hergestellten Formteils kann das Formteil mechanisch aufbereitet werden, etwa gestrahlt werden, um beispielsweise überschüssiges Pulver zu entfernen. Dies ist besonders vorteilhaft, da Pulverreste ebenfalls angelöst würden und anschließend auf der Oberfläche aushärten. Bei zu viel Restpulver auf der Oberfläche kann das Glättergebnis negativ beeinflusst werden.

Zudem können die Formteile vor oder nach dem Glätten mit Kunststoffkugeln gestrahlt werden, um dadurch ein Verdichten der Oberfläche zu erreichen. Vorteilhaft ist es hierbei, wenn die Kunststoffkugeln einen geringeren Härtegrad aufweisen als das Material des Formteils - dadurch wird ein Verdichten der Oberfläche gewährleistet, ohne dass die Oberfläche beschädigt wird.

In einer Ausgestaltung der Erfindung können die Formteile vor oder nach dem Glätten gefärbt werden und/oder nach dem Glätten imprägniert oder lackiert werden.

Vor der Behandlung der Oberfläche eines in einem 3D-Druckverfahren hergestellten Formteils kann das Formteil mechanisch aufbereitet werden, etwa gestrahlt werden, um beispielsweise überschüssiges Pulver zu entfernen. Dies ist besonders vorteilhaft, da Pulverreste ebenfalls angelöst würden und anschließend auf der Oberfläche aushärten. Bei zu viel Restpulver auf der Oberfläche kann das Glättergebnis negativ beeinflusst werden.

Zudem können die Formteile vor oder nach dem Glätten mit Kunststoffkugeln gestrahlt werden, um dadurch ein Verdichten der Oberfläche zu erreichen. Vorteilhaft ist es hierbei, wenn die Kunststoffkugeln einen geringeren Härtegrad aufweisen als das Material des Formteils - dadurch wird ein Verdichten der Oberfläche gewährleistet, ohne dass die Oberfläche beschädigt wird.

In einer Ausgestaltung der Erfindung können die Formteile vor oder nach dem Glätten gefärbt werden und/oder nach dem Glätten imprägniert oder lackiert werden.

**Fig. 3** zeigt einen Temperaturverlauf des Innenraumes des druckdichten Behältnisses bzw. des in diesen Innenraum eingebrachten Formteils während einer Durchführung eines Verfahrens, bei dem drei Zyklen (Schritte S4 bis S5) durchgeführt werden, wobei nach jedem Zyklus die Temperatur des Formteils bzw. die Innentemperatur des Innenraumes ansteigt.

Ein Zyklus kann aber auch ein mehrmaliges Bedampfen der Oberfläche mit dem dampfförmigen Lösungsmittel umfassen, wobei zwischen jedem Bedampfen der Oberfläche die Innentemperatur angepasst werden kann. Bei dem in Fig. 3 gezeigten Temperaturverlauf können die drei gezeigten und nachfolgend beschriebenen Zyklen auch Bestandteil eines einzelnen Zyklus sein. Dies gilt auch für die weiteren mit Bezug auf Fig. 4 bis Fig. 7 gezeigten Temperaturverläufe.

Für das in Fig. 3 gezeigte Beispiel wurde für die Herstellung des Formteils das Material Polypropylen verwendet. Als Lösungsmittel wurde Diethylbenzol verwendet.

Unter Diethylbenzol ist allgemein ein Isomerengemisch aus 1,2-, 1,3- und 1,4-Diethylbenzol zu verstehen, wobei das Mischungsverhältnis bevorzugt Folgende ist:
- 1% bis 35% 1,2-Diethylbenzol,
- 25% bis 85% 1,3-Diethylbenzol, und
- 5% bis 60% 1,4-Diethylbenzol.

Besonders bevorzugt ist folgendes Mischungsverhältnis:
- 1% bis 25% 1,2-Diethylbenzol,
- 40% bis 85% 1,3-Diethylbenzol, und
- 20% bis 55% 1,4-Diethylbenzol.

In beiden Fällen ergänzen sich die Anteile auf zusammen 100%.

Der Innenraum des druckdichten Behältnisses wird zunächst auf eine erste Innentemperatur von etwa 130°C gebracht. Zum Zeitpunkt t1 wird das Formteil in den Innenraum gegeben und das druckdichte Behältnis druckdicht verschlossen sowie ein weitgehendes Vakuum im Innenraum erzeugt. Das in den Innenraum gegebene Formteil wird durch die Strahlungswärme des Innenraumes erwärmt, wodurch die erste Innentemperatur gleichzeitig auf eine dritte Innentemperatur, die etwa 108°C beträgt, absinkt. Zum Zeitpunkt t2 entspricht die Temperatur des Formteils weitgehend der dritten Innentemperatur.

Zum Zeitpunkt t3, der unmittelbar nach dem Zeitpunkt t2 liegen kann, wird das auf 130°C erwärmte Lösungsmittel dazugegeben, welches schlagartig verdampft bzw. als Lösungsmitteldampf in den Innenraum des druckdichten Behältnisses eintritt. Der Lösungsmitteldampf kondensiert dann an der Oberfläche des Formteils, da die Temperaturdifferenz zwischen der Temperatur des Formteiles und der Temperatur des Lösungsmitteldampfes etwa 22°C beträgt.

Durch das Hinzugeben des Lösungsmittels steigt die Innentemperatur um etwa 2°C auf eine zweite Innentemperatur (hier ca. 110°C) an. Nachdem diese zweite Innentemperatur erreicht wird (zum Zeitpunkt t3.1), wird die Lösungsmittelzufuhr gestoppt und ein Vakuumtrocknen des Formteiles durchgeführt. Der sich noch im Innenraum befindliche Lösungsmitteldampf kann abgesaugt werden. An den Innwänden des Innenraumes bzw. am Boden des Innenraumes vorhandenes Lösungsmittelkondensat kann ebenfalls abgesaugt werden. Der Trocknungsprozess beträgt dann wenige Sekunden.

Vor dem Starten des Trocknungsvorganges T und vor dem Absaugen des Lösungsmitteldampfes kann eine vorbestimmte Haltezeit H vorgesehen werden, während der sich das Formteil in einer Umgebung befindet, die sich unmittelbar nach dem Einbringen des Lösungsmittels bzw. des Lösungsmitteldampfes (zum Zeitpunkt t3.1) in den Innenraum des druckdichten Behältnisses einstellt. Nach Erreichen der Haltezeit H kann der Trocknungsvorgang T gestartet und der Lösungsmitteldampf abgesaugt werden. Im Anschluss an den Trocknungsvorgang T kann eine weitere Haltezeit H vorgesehen. Die Haltezeiten liegen zwischen 0,5 s und 600 s, bevorzugt zwischen 1 s und 60 s. Die beiden Haltezeiten können verschieden lang sein. Es kann auch auf eine der beiden Haltezeiten verzichtet werden.

Nachdem das Formteil getrocknet ist, wird zum Zeitpunkt t4 erneut Lösungsmittel zugegeben, das nach wie vor eine Temperatur von etwa 130°C aufweist. Da die Temperaturdifferenz zwischen dem Formteil und dem eingebrachten Lösungsmittel nunmehr geringer ist (hier ca. 20°C) als zum Zeitpunkt t3 muss durch Zugabe des Lösungsmittels die zweite Innentemperatur und damit die Temperatur des Formteiles noch weiter erhöht werden (hier auf ca. 115°C), damit an der Oberfläche des Formteiles genügend Lösungsmitteldampf für den gewünschten Glättungseffekt kondensieren kann. Anschließend wird das Formteil wieder vakuumgetrocknet.

Zum Zeitpunkt t5 wird der dritte Zyklus gestartet, in dem erneut auf 130°C erwärmtes Lösungsmittel hinzugegeben wird. Da zum Zeitpunkt t5 die Temperaturdifferenz zwischen der Temperatur des Formteiles und dem zugegebenen Lösungsmittel nochmals kleiner ist (hier ca. 15°C) als zum Zeitpunkt t4 muss durch die Zugabe des Lösungsmittels die zweite Innentemperatur und damit die Temperatur des Formteiles noch weiter erhöht werden, vorliegend auf etwa 120°C. Damit wird erreicht, dass auch in dem dritten Zyklus genügend Lösungsmitteldampf an der Oberfläche des Formteiles für die gewünschte Glättung kondensieren kann. Anschließend wird das Formteil vakuumgetrocknet.

Nach jeder Zugabe von Lösungsmittel bzw. Lösungsmitteldampf können die vorstehend genannten Haltezeiten vorgesehen werden.

Bei dem in Fig. 3 gezeigten Beispiel wird nach der zweiten Zugabe von Lösungsmittel (zum Zeitpunkt t4) eine Haltezeit H vorgesehen, bevor der Trocknungsvorgang T eingeleitet wird. Eine weitere Haltezeit nach dem Trocknungsvorgang T ist hier hingegen nicht vorgesehen.

Zudem wird dem in Fig. 3 gezeigten Beispiel nach der dritten Zugabe von Lösungsmittel (zum Zeitpunkt t5) zunächst der Trocknungsvorgang ohne vorherige Haltezeit durchgeführt. Im Anschluss an den Trocknungsvorgang ist dann eine Haltezeit H vorgesehen.

In einer Ausgestaltung der Erfindung kann es vorgesehen sein, die Haltezeiten nur in dem ersten Zyklus vorzusehen, d.h., zwischen den Zeitpunkten t3.1 und t4.

Die genannten Haltezeiten können auch bei den in Fig. 4 bis Fig. 7 gezeigten Beispielen vorgesehen werden.

Zum Zeitpunkt t6 wird schließlich ein Abkühlen des Innenraumes und damit des Formteiles eingeleitet. Nach Erreichen einer bestimmten Innenraumtemperatur, vorliegend bei etwa zwischen 105°C und 110°C kann das Formteil aus dem Innenraum entnommen werden. Dieser Abkühlvorgang ist lediglich optional, d.h. die Formteile können direkt nach dem Trocken entnommen werden. Der Abkühlvorgang hat aber den Vorteil, dass ein Vergilben der entnommen Formteile verhindert wird, da der Abkühlvorgang bei Unterdruck bzw. bei unter Vakuum erfolgt. Zudem kann durch ein kontrolliertes Abkühlen der thermische Stress, dem das Formteil während des Abkühlens ausgesetzt ist, reduziert werden.

Selbstverständlich muss vor Entnahme der Formteile der Innenraum des druckdichten Behältnisses auf Atmosphärendruck gebracht werden.

Die zu erreichende zweite Innentemperatur im zweiten und im dritten Zyklus kann reduziert werden, wenn die Lösungsmitteltemperatur für den zweiten bzw. für den dritten Zyklus entsprechend erhöht wird. So kann beispielsweise eine Erhöhung der Lösungsmitteltemperatur von 130°C auf 135°C im zweiten Zyklus ausreichend sein, dass die zweite Innentemperatur im zweiten Zyklus lediglich von 110°C auf 112°C erhöht werden muss, da in diesem Fall zum Zeitpunkt t4 die Temperaturdifferenz zwischen der Temperatur des Formteils und der Temperatur des Lösungsmittels in etwa gleich groß ist wie zum Zeitpunkt t3. Eine solche Erhöhung der Lösungsmitteltemperatur ist allerdings nur dann möglich, wenn die erhöhte Lösungsmitteltemperatur nicht zu einem zu starken Anlösen oder zu einer Beschädigung der Oberfläche des Formteils führt.

**Fig. 4** zeigt einen Temperaturverlauf der Innentemperatur des Innenraumes, wobei hier nach jedem Zyklus die Innentemperatur des Innenraumes und damit die Temperatur des Formteiles auf einen bestimmten Wert abgekühlt werden.

Für die Herstellung des Formteiles wurde auch hier PP verwendet. Als Lösungsmittel wurde auch hier Diethylbenzol verwendet.

Zunächst wird der Innenraum des druckdichten Behältnisses auf eine erste Innentemperatur von etwa 130°C gebracht. Zum Zeitpunkt t1 wird das Formteil in den Innenraum gegeben und der Innenraum druckdicht verschlossen. Im Innenraum wird sodann ein weitgehendes Vakuum erzeugt. Die Temperaturdifferenz zwischen der Temperatur des Formteiles und der ersten Innentemperatur führt hier dazu, dass die erste Innentemperatur bis zum Zeitpunkt t2 auf eine dritte Innentemperatur absinkt und die Temperatur des Formteiles auf diese dritte Innentemperatur (hier ca. 108°C) ansteigt.

Nach Erreichen dieser dritten Innentemperatur wird zum Zeitpunkt t3 ein auf 130°C erwärmtes Lösungsmittel zugegeben, das im Innenraum schlagartig verdampft bzw. das bereits als Lösungsmitteldampf in den Innenraum gelangt. Der Lösungsmitteldampf kondensiert an der Oberfläche des Formteiles und bewirkt dadurch die gewünschte Glättung. Durch das Hinzugeben des Lösungsmittels steigen die Innentemperatur des Innenraumes und damit auch die Temperatur des Formteiles von der dritten Innentemperatur auf die zweite Innentemperatur an (hier ca. 110°C). Sobald diese zweite Innentemperatur erreicht worden ist, wird das Einbringen des Lösungsmittels gestoppt. Anschließend wird das Formteil vakuumgetrocknet.

Nach Abschluss des Trockenvorganges wird der Innenraum abgekühlt, vorzugsweise auf die dritte Innentemperatur, wie zum Zeitpunkt t2 (hier also auf ca. 108°C). Dadurch wird erreicht, dass im nächsten Zyklus die Temperaturdifferenz zwischen der Temperatur des Formteiles und der Temperatur des Lösungsmittels gleich groß ist wie zum Zeitpunkt t3.

Nach dem Abkühlen des Innenraumes bzw. des Formteiles wird zum Zeitpunkt t4 erneut das auf 130°C erwärmte Lösungsmittel dazugegeben. Im Unterschied zu dem in Fig. 3 gezeigten Temperaturverlauf muss die nach dem Zeitpunkt t4 zu erreichende zweite Innentemperatur in diesem zweiten Zyklus nicht höher liegen als im ersten Zyklus. Es ist ausreichend, durch das Zufügen des Lösungsmittels in den Innenraum die zweite Innentemperatur im zweiten Zyklus auf die zweite Innentemperatur wie in dem ersten Zyklus zu bringen (also auf etwa 110°C). Denn aufgrund der Temperaturdifferenz zwischen der Temperatur des Formteiles und der Temperatur des Lösungsmittels zu Beginn des zweiten Zyklus kann ausreichend Dampf an der Oberfläche des Formteiles für die gewünschte Glättung kondensieren. Anschließend wird das Formteil wieder vakuumgetrocknet und die Innentemperatur des Innenraumes wird wieder abgesenkt, vorzugsweise auf die dritte Innentemperatur wie zum Zeitpunkt t2.

Der dritte Zyklus ist identisch zum zweiten Zyklus und wird zum Zeitpunkt t5 durch Zugabe des auf 130°C erwärmten Lösungsmittels eingeleitet.

Zum Zeitpunkt t6 ist der dritte Zyklus abgeschlossen und der Innenraum kann auf eine vorbestimmte Temperatur abgekühlt werden. Anschließend können die Formteile aus dem druckdichten Behältnis entnommen werden. Auf diesen Abkühlvorgang kann aber auch verzichtet werden und die Formteil direkt nach dem Trocken entnommen werden. Der Abkühlvorgang hat aber auch hier die mit Bezug auf Fig. 3 genannten Vorteile.

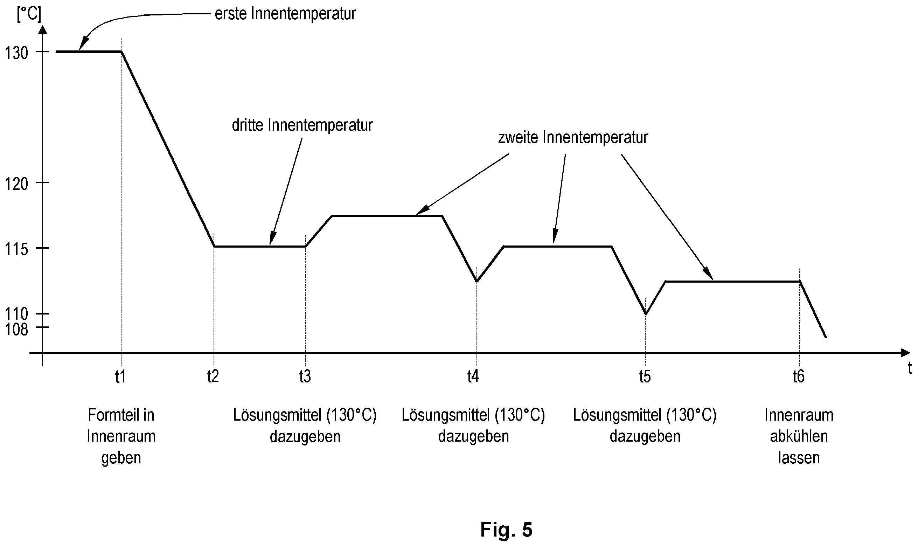

**Fig. 5** zeigt einen Temperaturverlauf der Innentemperatur des Innenraumes, wobei hier nach jedem Zyklus die Innentemperatur des Innenraumes und damit die Temperatur des Formteiles auf einen bestimmten Wert abgekühlt werden.

Für die Herstellung des Formteiles wurde auch hier PP verwendet. Als Lösungsmittel wurde auch hier Diethylbenzol verwendet.

Zunächst wird der Innenraum des druckdichten Behältnisses auf eine erste Innentemperatur von etwa 130°C gebracht. Zum Zeitpunkt t1 wird das Formteil in den Innenraum gegeben und der Innenraum druckdicht verschlossen. Im Innenraum wird sodann ein weitgehendes Vakuum erzeugt. Die Temperaturdifferenz zwischen der Temperatur des Formteiles und der ersten Innentemperatur führt hier dazu, dass die erste Innentemperatur bis zum Zeitpunkt t2 auf eine dritte Innentemperatur absinkt und die Temperatur des Formteiles auf diese dritte Innentemperatur (hier ca. 115°C) ansteigt.

Nach Erreichen dieser dritten Innentemperatur wird zum Zeitpunkt t3 ein auf 130°C erwärmtes Lösungsmittel zugegeben, das im Innenraum schlagartig verdampft bzw. das bereits als Lösungsmitteldampf in den Innenraum gelangt. Der Lösungsmitteldampf kondensiert an der Oberfläche des Formteiles und bewirkt dadurch die gewünschte Glättung. Durch das Hinzugeben des Lösungsmittels steigen die Innentemperatur des Innenraumes und damit auch die Temperatur des Formteiles von der dritten Innentemperatur (hier ca. 115°C) auf die zweite Innentemperatur an (hier ca. 117,5°C), also um ca. 2,5°C. Sobald diese zweite Innentemperatur erreicht worden ist, wird das Einbringen des Lösungsmittels gestoppt. Anschließend wird das Formteil vakuumgetrocknet.

Nach Abschluss des Trockenvorganges wird der Innenraum abgekühlt. Während bei dem in Fig. 4 gezeigten Beispiel die Temperatur des Innenraumes auf die Temperatur wie zum Zeitpunkt t2 abgesenkt wurde, wird bei dem in Fig. 5 gezeigten Beispiel die Temperatur des Innenraumes auf eine Temperatur unterhalb der Temperatur wie zum Zeitpunkt t2 abgesenkt (hier um ca. 5°C auf 112,5°C). Dadurch wird erreicht, dass zu Beginn des nächsten Zyklus die Temperaturdifferenz zwischen der Temperatur des Formteiles und der Temperatur des Lösungsmittels größer ist zu Beginn des vorhergehenden Zyklus (zum Zeitpunkt t3).

Nach dem Abkühlen des Innenraumes bzw. des Formteiles wird zum Zeitpunkt t4 erneut das auf 130°C erwärmte Lösungsmittel dazugegeben. Im Unterschied zu dem in Fig. 4 gezeigten Temperaturverlauf kann die nach dem Zeitpunkt t4 zu erreichende zweite Innentemperatur in diesem zweiten Zyklus niedriger sein (hier ca. 115°C) als im ersten Zyklus. Denn aufgrund der größeren Temperaturdifferenz zum Zeitpunkt t4 zwischen der Temperatur des Formteiles und der Temperatur des Lösungsmittels kann dennoch ausreichend Dampf an der Oberfläche des Formteiles für die gewünschte Glättung kondensieren. Anschließend wird das Formteil wieder vakuumgetrocknet und die Innentemperatur des Innenraumes wird wieder abgesenkt (hier auf ca. 110°C).

Der dritte Zyklus ist identisch zum zweiten Zyklus und wird zum Zeitpunkt t5 durch Zugabe des auf 130°C erwärmten Lösungsmittels eingeleitet, wodurch die zweite Innentemperatur auf etwa 112°C ansteigt.

Zum Zeitpunkt t6 ist der dritte Zyklus abgeschlossen und der Innenraum kann auf eine vorbestimmte Temperatur abgekühlt werden. Anschließend können die Formteile aus dem druckdichten Behältnis entnommen werden. Auf diesen Abkühlvorgang kann aber auch verzichtet werden und die Formteil direkt nach dem Trocken entnommen werden. Der Abkühlvorgang hat aber auch hier die mit Bezug auf Fig. 3 genannten Vorteile.

Vorteilhaft ist hierbei, dass durch das stetige Abkühlen die Oberfläche des Formteils in jedem Zyklus weniger stark angelöst wird, wodurch eine schonendere Glättung erreicht wird. Die höheren Temperaturen im ersten Zyklus haben den Vorteil, dass eine schnelle erste Glättung erreicht wird.

Vorteilhaft kann es auch sein, die Temperatur des Lösungsmittels nach jedem Zyklus zu reduzieren, beispielsweise um 2°C bis 5°C. Das gilt auch für die mit Bezug auf Fig. 3, Fig. 4, Fig. 6 und Fig. 7 gezeigten Varianten.

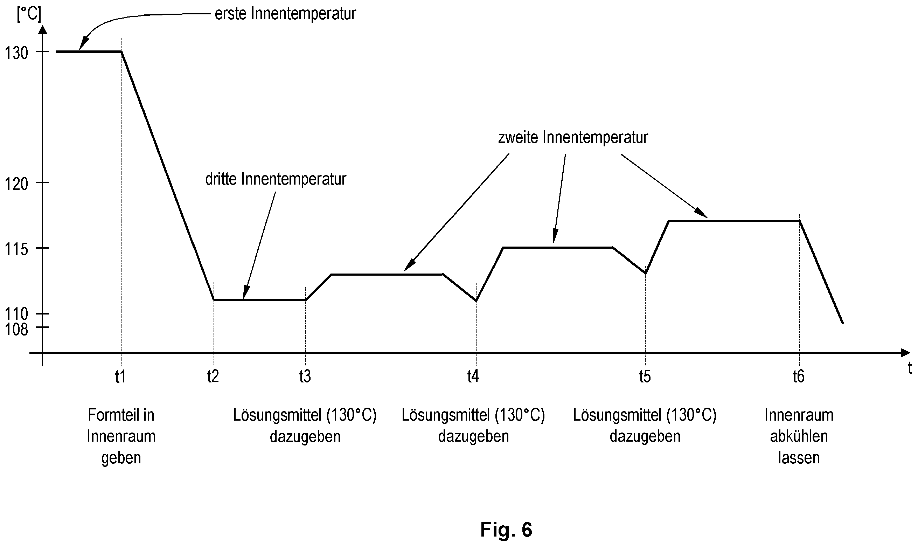

**Fig. 6** zeigt einen Temperaturverlauf der Innentemperatur des Innenraumes, wobei hier nach jedem Zyklus die Innentemperatur des Innenraumes und damit die Temperatur des Formteiles auf einen bestimmten Wert abgekühlt werden. Im Unterschied zu dem in Fig. 5 gezeigten Temperaturverlauf die zweite Innentemperatur in jedem Zyklus höher ist als bei dem vorhergehenden Zyklus.

Für die Herstellung des Formteiles wurde auch hier PP verwendet. Als Lösungsmittel wurde auch hier Diethylbenzol verwendet.

Zunächst wird der Innenraum des druckdichten Behältnisses auf eine erste Innentemperatur von etwa 130°C gebracht. Zum Zeitpunkt t1 wird das Formteil in den Innenraum gegeben und der Innenraum druckdicht verschlossen. Im Innenraum wird sodann ein weitgehendes Vakuum erzeugt. Die Temperaturdifferenz zwischen der Temperatur des Formteiles und der ersten Innentemperatur führt hier dazu, dass die erste Innentemperatur bis zum Zeitpunkt t2 auf eine dritte Innentemperatur absinkt und die Temperatur des Formteiles auf diese dritte Innentemperatur (hier ca. 111°C) ansteigt.

Nach Erreichen dieser dritten Innentemperatur wird zum Zeitpunkt t3 ein auf 130°C erwärmtes Lösungsmittel zugegeben, das im Innenraum schlagartig verdampft bzw. das bereits als Lösungsmitteldampf in den Innenraum gelangt. Der Lösungsmitteldampf kondensiert an der Oberfläche des Formteiles und bewirkt dadurch die gewünschte Glättung. Durch das Hinzugeben des Lösungsmittels steigen die Innentemperatur des Innenraumes und damit auch die Temperatur des Formteiles von der dritten Innentemperatur (hier ca. 111°C) auf die zweite Innentemperatur an (hier ca. 113°C), also um ca. 2°C. Sobald diese zweite Innentemperatur erreicht worden ist, wird das Einbringen des Lösungsmittels gestoppt. Anschließend wird das Formteil vakuumgetrocknet.

Nach Abschluss des Trockenvorganges wird der Innenraum abgekühlt (hier um ca. 2°C auf ca. 111°C). Dadurch wird erreicht, dass zu Beginn des nächsten Zyklus die Temperaturdifferenz zwischen der Temperatur des Formteiles und der Temperatur des Lösungsmittels etwa gleich groß ist, wie zu Beginn des vorhergehenden Zyklus (zum Zeitpunkt t3).

Nach dem Abkühlen des Innenraumes bzw. des Formteiles wird zum Zeitpunkt t4 erneut das auf 130°C erwärmte Lösungsmittel dazugegeben. Im Unterschied zu dem in Fig. 5 gezeigten Temperaturverlauf kann die nach dem Zeitpunkt t4 zu erreichende zweite Innentemperatur in diesem zweiten Zyklus höher sein (hier ca. 115°C) als im ersten Zyklus. Anschließend wird das Formteil wieder vakuumgetrocknet und die Innentemperatur des Innenraumes wird wieder abgesenkt (hier um etwa 2°C auf ca. 113°C).

Der dritte Zyklus ist identisch zum zweiten Zyklus und wird zum Zeitpunkt t5 durch Zugabe des auf 130°C erwärmten Lösungsmittels eingeleitet, wodurch die zweite Innentemperatur auf etwa 117°C ansteigt.

Zum Zeitpunkt t6 ist der dritte Zyklus abgeschlossen und der Innenraum kann auf eine vorbestimmte Temperatur abgekühlt werden. Anschließend können die Formteile aus dem druckdichten Behältnis entnommen werden. Auf diesen Abkühlvorgang kann aber auch verzichtet werden und die Formteil direkt nach dem Trocken entnommen werden. Der Abkühlvorgang hat aber auch hier die mit Bezug auf Fig. 3 genannten Vorteile.

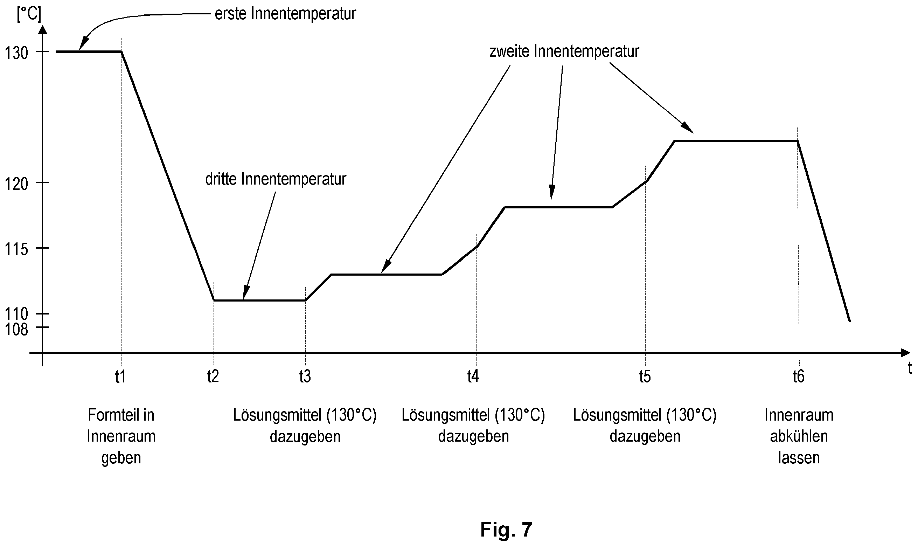

**Fig. 7** zeigt einen Temperaturverlauf der Innentemperatur des Innenraumes, wobei hier nach jedem Zyklus die Innentemperatur des Innenraumes und damit die Temperatur des Formteiles weiter erwärmt werden.

Für die Herstellung des Formteiles wurde auch hier PP verwendet. Als Lösungsmittel wurde 1,2-Diethylbenzol verwendet. Dieses Isomer ist besonders vorteilhaft für sensible Anwendungen z.B. im Medizinbereich, da es im Vergleich zu dem Isomerengemisch sowie den anderen Reinisomeren keine Anzeichen für respirationstoxische Wirkung gibt.

Zunächst wird der Innenraum des druckdichten Behältnisses auf eine erste Innentemperatur von etwa 130°C gebracht. Zum Zeitpunkt t1 wird das Formteil in den Innenraum gegeben und der Innenraum druckdicht verschlossen. Im Innenraum wird sodann ein weitgehendes Vakuum erzeugt. Die Temperaturdifferenz zwischen der Temperatur des Formteiles und der ersten Innentemperatur führt hier dazu, dass die erste Innentemperatur bis zum Zeitpunkt t2 auf eine dritte Innentemperatur absinkt und die Temperatur des Formteiles auf diese dritte Innentemperatur (hier ca. 111°C) ansteigt.

Nach Erreichen dieser dritten Innentemperatur wird zum Zeitpunkt t3 ein auf 130°C erwärmtes Lösungsmittel zugegeben, das im Innenraum schlagartig verdampft bzw. das bereits als Lösungsmitteldampf in den Innenraum gelangt. Der Lösungsmitteldampf kondensiert an der Oberfläche des Formteiles und bewirkt dadurch die gewünschte Glättung. Durch das Hinzugeben des Lösungsmittels steigen die Innentemperatur des Innenraumes und damit auch die Temperatur des Formteiles von der dritten Innentemperatur (hier ca. 111°C) auf die zweite Innentemperatur an (hier ca. 113°C), also um ca. 2°C. Sobald diese zweite Innentemperatur erreicht worden ist, wird das Einbringen des Lösungsmittels gestoppt. Anschließend wird das Formteil vakuumgetrocknet.

Nach Abschluss des Trockenvorganges wird der Innenraum (und damit das Formteil) weiter erwärmt (hier um ca. 2°C auf ca. 115°C).

Nach dem Erwärmen des Innenraumes bzw. des Formteiles wird zum Zeitpunkt t4 erneut das auf 130°C erwärmte Lösungsmittel dazugegeben. Die zweite Innentemperatur steigt dadurch auf um etwa 3°C auf ca. 118°C. Anschließend wird das Formteil wieder vakuumgetrocknet und die Innentemperatur des Innenraumes wird wieder weiter erwärmt (hier um etwa 2°C auf ca. 120°C).

Der dritte Zyklus ist identisch zum zweiten Zyklus und wird zum Zeitpunkt t5 durch Zugabe des auf 130°C erwärmten Lösungsmittels eingeleitet, wodurch die zweite Innentemperatur auf etwa 123°C ansteigt.

Zum Zeitpunkt t6 ist der dritte Zyklus abgeschlossen und der Innenraum kann auf eine vorbestimmte Temperatur abgekühlt werden. Anschließend können die Formteile aus dem druckdichten Behältnis entnommen werden.

Bei den mit Bezug auf Fig. 3 bis Fig. 7 gezeigten Beispielen eines Temperaturverlaufes wurde jeweils drei Zyklen (Bedampfen der Oberfläche und anschließendes Trocknen) durchgeführt. Je nach gewünschter Glätte und abhängig vom Material des Formteils sowie vom verwendeten Lösungsmittel können auch mehr als drei oder weniger als drei Zyklen durchgeführt werden.

Bei den mit Bezug auf Fig. 3 bis Fig. 7 gezeigten Beispielen eines Temperaturverlaufes wurde zunächst die Innentemperatur des druckdichten Behältnisses auf eine vorbestimmte erste Innentemperatur (hier 130°C) gebracht, bevor das (kalte) Formteil in den Innenraum eingebracht wurde (zum Zeitpunkt t1).

Alternativ hierzu kann das Formteil aber auch in den "kalten" Innenraum eingebracht werden und anschließend kann der Innenraum auf die gewünschte erste Innentemperatur gebracht werden (z.B. auf 130°C). Bei mit Bezug auf Fig. 3 bis Fig. 7 gezeigten Beispielen, wäre es hierbei ausreichend, den Innenraum (samt des darin eingebrachten kalten Formteils) auf eine erste Innentemperatur zu bringen, bei der ein anschließendes Absenken auf eine dritte Innentemperatur nicht mehr notwendig ist. So kann beispielsweise bei dem in Fig. 3 gezeigten Beispiel der Innenraum mit dem darin angeordneten Formteil solange erwärmt werden, bis eine Temperatur von etwa 108°C erreicht wird. Anschließend kann dann direkt das Lösungsmittel zugegeben werden. Hierbei ist er vorteilhaft, das Erwärmen des Innenraumes und damit des Formteils unter Vakuum durchzuführen.

Bei den mit Bezug auf Fig. 3 bis Fig. 7 gezeigten Beispielen wurde in jedem Zyklus das gleiche Lösungsmittel zugegeben. Alternativ hierzu kann zumindest in einem Zyklus ein anderes Lösungsmittel zugegeben als in den anderen Zyklen. So kann etwa bei Formteilen mit besonders grobporigen Oberflächen in dem ersten Zyklus ein Lösungsmittel zugegeben werden, das ein schnelles und/oder stärkeres Anlösen der Oberfläche bewirkt. Damit können auch größere Poren verschlossen werden. In den nachfolgenden Zyklen kann dann j eweils ein Lösungsmittel zugegeben werden, mit dem die Oberfläche dann nur mehr leicht und/oder langsamer angelöst wird.

Bei den in Fig. 3, Fig. 6 und Fig. 7 gezeigten Beispielen steigt die zweite Innentemperatur mit jedem Zyklus sukzessive an. Bei dem in Fig. 4 gezeigten Beispiel bleibt die zweite Innentemperatur über mehrere Zyklen hinweg konstant. Bei dem in Fig. 5 gezeigten Beispiel fällt die zweite Innentemperatur mit jedem Zyklus sukzessive ab.

Die in Fig. 3 bis Fig. 7 gezeigten Temperaturverläufe können auch kombiniert werden. D.h., das Verfahren kann auch so durchgeführt werden, dass die zweite Innentemperatur in zwei oder mehr aufeinanderfolgenden Zyklen steigt bzw. fällt und in auf diese Zyklen folgenden Zyklen fällt bzw. steigt. Damit kann der Temperaturverlauf abhängig von den Materialien der Formteile und abhängig von dem verwendeten Lösungsmittel optimal an die zu erzielende Oberflächenglätte angepasst werden, insbesondere dann, wenn in verschiedenen Zyklen verschiedene Lösungsmittel zum Einsatz kommen.

Die vorstehend mit Bezug auf Fig. 3 bis Fig. 7 beschriebenen Versuche wurden für
- PEEK als Material des Formteils und Diethylbenzol als Lösungsmittel, und
- PP als Material des Formteils und Xylol als Lösungsmittel
wiederholt.

Beispiel: PEEK als Material des Formteils und Diethylbenzol als Lösungsmittel:
Es wurde ein Versuch mit dem in Fig. 3 gezeigten Temperaturverlauf durchgeführt. Das Ergebnis war ein Formteil mit einer Oberfläche das keine Poren aufwies.

Beispiel: PP als Material des Formteils und Xylol als Lösungsmittel:
Die Temperaturen der in den Fig. 3 bis Fig. 7 gezeigten Temperaturverläufe liegen hier bei etwa zwischen 100°C und 140°C. Konkret wurde in einem Versuch ein Formteil aus PP mit dem in Fig. 3 gezeigten Temperaturverlauf durchgeführt, wobei die Temperatur zum Zeitpunkt t2 bei etwa 100°C lag, und die zweite Innentemperatur beim ersten Zyklus bei etwa 103°C, beim zweiten Zyklus bei etwa 109°C und beim dritten Zyklus bei etwa 115°C. Der Druck im Innenraum des druckdichten Behältnisses wurde auf unterhalb des Atmosphärendruckes eingestellt (konkret auf etwa 200 hPa). Dieser leichte Unterdruck ist ausreichend, damit Xylol im Innenraum bereits bei etwa 100°C verdampfen kann.

Nachfolgend werden zwei Versuche beschrieben.

### Versuch 1:

Die Formteile werden mit dem Polyamid PA2200 in einem 3D-Druckverfahren hergestellt.

Der Innenraum 21 des druckdichten Behältnisses wird auf eine Temperatur von 135°C erwärmt (Schritt S1, erste Innenraumtemperatur).

Die Formteile werden in den Innenraum 21 eingebracht (Schritt S2) und in dem Innenraum 21 wird ein weitgehendes Vakuum (etwa 7 mbar) erzeugt. Durch das Öffnen und Schließen der Prozesskammer während des Einbringens der Formteile in den Innenraum, kühlt der Innenraum wieder etwas ab (auf etwa 125°C, 3. Innentraumtemperatur).

Lösungsmittelbehältnis wird mit Diethylbenzol als Lösungsmittel gefüllt. Vor oder während der Schritte S1 und S2 wird das Lösungsmittels auf eine Temperatur von etwa 135°C erwärmt (Schritt S3), wobei im Lösungsmittelbehältnis ein Druck von 130 mbar erreicht wird. Aufgrund der Dampfdruckkurve von Diethylbenzol wird damit erreicht, dass ein Teil des Lösungsmittels verdampft.

Durch Öffnen des Ventils 50 für eine Dauer von etwa 16 s und die Druckdifferenz zwischen Innenraum 21 und Lösungsmittelbehälter 40 strömt Lösungsmittel im Schritt S4 in den Innenraum 21 ein und kondensiert an den Formteilen, da diese eine geringere Temperatur aufweisen, als der einströmende Dampf. Dabei fällt der Druck in dem Lösungsmittelbehälter 40 auf etwa 100 mbar ab, während der Druck in dem Innenraum 21 auf etwa 80 mbar ansteigt. Gleichzeitig erhöht sich die Temperatur in dem Innenraum 21 auf etwa 126°C (2. Innenraumtemperatur).

Anschließend wird das Lösungsmittel aus dem Innenraum 21 abgesaugt (Schritt S4.1) und das Formteil im Vakuum getrocknet (Schritt S5). Dabei sinkt die Temperatur in dem Innenraum 21 bedingt durch die Verdunstung des Lösungsmittels auf eine Temperatur unterhalb der 2. Innenraumtemperatur (<126 °C), wobei die Temperatur auch unterhalb die 3. Innenraumtemperatur fallen kann (<125 °C). Dadurch wird sichergestellt, dass die Temperatur des Lösungsmitteldampfes immer über der Temperatur des Innenraums 21 liegt und damit auch über der Temperatur der zu glättenden Formteile. Damit kann auch in den folgenden Bedampfungszyklen sichergestellt werden, dass Lösungsmittel an der Oberfläche der Formteile kondensiert und diese weiter geglättet werden.

Die Schritte S4, S4.1 und S5 werden anschließend 18 Mal wiederholt, ehe das Bauteil final getrocknet wird.

### Versuch 2:

Die Formteile werden aus PEEK in einem 3D-Druckverfahren hergestellt.

Der Innenraum 21 des druckdichten Behältnisses wird auf eine Temperatur von etwa 135°C erwärmt (Schritt S1, erste Innenraumtemperatur).

Die Formteile werden in den Innenraum 21 eingebracht (Schritt S2) und in dem Innenraum 21 wird ein weitgehendes Vakuums (etwa 8 mbar) erzeugt. Durch das Öffnen und Schließen der Prozesskammer 20, kühlt der Innenraum 21 bei diesem Prozessschritt wieder etwas ab.

Anschließend verweilen die Formteile für 30 Minuten in der vorgewärmten, evakuierten Kammer. Dies hat den Vorteil, dass die Formteile schonend erwärmt werden und dadurch der thermische Stress, der beim Einströmen des heißen Lösungsmitteldampfes ausgelöst wird, auf ein Minimum reduziert werden kann. Gleichzeitig ermöglicht dies ein schonendes Entweichen von möglicherweise im Material gebundenem Wasser und reduziert beim späteren Bedampfen die Menge an kondensiertem Lösungsmittel. Dadurch keine eine Blasenbildung durch Verkochen der Oberfläche verhindert werden. Nach dieser Zeit ist der Innenraum 21 auf eine Temperatur von 105°C (3. Innenraumtemperatur) abgekühlt.

Das Lösungsmittelbehältnis 40 wird mit Diethylbenzol als Lösungsmittel gefüllt. Vor oder während der Schritte S1 und S2 wird das Lösungsmittels auf eine Temperatur von etwa 135°C erwärmt (Schritt S3), wobei im Innenraum 70 ein Druck von etwa 120 mbar erreicht wird. Aufgrund der Dampfdruckkurve von Diethylbenzol wird damit erreicht, dass ein Teil des Lösungsmittels verdampft.

Durch Öffnen des Ventils 50 für eine Dauer von etwa 25 s und die Druckdifferenz zwischen Innenraum 21 und Innenraum 70 strömt Lösungsmittel im Schritt S4 in den Innenraum 21 ein und kondensiert an den Formteilen, da diese eine geringere Temperatur aufweisen als der einströmende Lösemitteldampf. Dabei fällt der Druck in dem Lösungsmittelbehälter 40 auf etwa 90 mbar ab, während der Druck in dem Innenraum 21 auf etwa 70 mbar ansteigt. Gleichzeitig erhöht sich die Temperatur in dem Innenraum 21 auf etwa 110°C (2. Innenraumtemperatur).

Anschließend wird das Lösungsmittel abgesaugt (Schritt S4.1) und das Bauteil im Vakuum getrocknet (Schritt S5). Dabei sinkt die Temperatur in dem Innenraum 21 bedingt durch die Verdunstung des Lösungsmittels auf eine Temperatur unterhalb der 2. Innenraumtemperatur (<110 °C).

Anschließend wird die Temperatur im Innenraum 21 reduziert, was beispielsweise durch ein kurzzeitiges Öffnen der Behältnisses 20 gefolgt von einem erneuten Schließen des Behältnisses 20 und Evakuieren des Innenraumes 21 erreicht werden kann. Damit wird eine Temperatur unterhalb der 2. Innenraumtemperatur, bevorzugt genau die 3. Innenraumtemperatur erreicht.

Die Schritte S4, S4.1 und S5 werden anschließend 2 Mal wiederholt, ehe das Bauteil final getrocknet wird.

### Versuch 3:

Die Formteile werden aus Polypropylen in einem 3D-Druckverfahren hergestellt.

Der Innenraum 21 des druckdichten Behältnisses wird auf eine Temperatur von 125 °C erwärmt (Schritt S1).

Die Formteile werden in den Innenraum 21 eingebracht (Schritt S2) und in dem Innenraum 21 wird ein weitgehendes Vakuum (etwa 7 mbar) erzeugt. Durch das Öffnen und Schließen der Prozesskammer während des Einbringens der Formteile in den Innenraum, kühlt der Innenraum wieder etwas ab (auf etwa 115 °C).

Das Lösungsmittelbehältnis wird mit 1,8-Cineol als Lösungsmittel gefüllt. Vor oder während der Schritte S1 und S2 wird das bio-basierte Lösungsmittels auf eine Temperatur von etwa 130 °C erwärmt (Schritt S3), wobei im Lösungsmittelbehältnis ein Druck von 250 mbar erreicht wird. Aufgrund der Dampfdruckkurve von Limonen wird damit erreicht, dass ein Teil des Lösungsmittels verdampft.

Durch Öffnen des Ventils 50 für eine Dauer von etwa 12 s und die Druckdifferenz zwischen Innenraum 21 und Lösungsmittelbehälter 40 strömt Lösungsmittel im Schritt S4 in den Innenraum 21 ein und kondensiert an den Formteilen, da diese eine geringere Temperatur aufweisen, als der einströmende Lösungsmitteldampf. Dabei fällt der Druck in dem Lösungsmittelbehälter 40 auf etwa 100 mbar ab, während der Druck in dem Innenraum 21 auf etwa 85 mbar ansteigt. Gleichzeitig erhöht sich die Temperatur in dem Innenraum 21 auf etwa 116 °C.

Nach etwa 12 s wird das Ventil 50 geschlossen, um die Lösungsmittelzufuhr in den Innenraum 21 zu stoppen. Das Formteil bleibt dann für etwa 15 s (Haltezeit, Schritt S4a) im Innenraum 21. In einer alternativen Ausgestaltung der Erfindung kann auf diese Haltezeit aber auch verzichtet werden.

Anschließend wird das Lösungsmittel aus dem Innenraum 21 abgesaugt (Schritt S4.1) und das Formteil im Vakuum getrocknet (Schritt S5). Dabei sinkt die Temperatur in dem Innenraum 21 bedingt durch die Verdunstung des Lösungsmittels auf eine Temperatur unterhalb von 116 °C. Dadurch wird sichergestellt, dass die Temperatur des Lösungsmitteldampfes immer über der Temperatur des Innenraums 21 liegt und damit auch über der Temperatur der zu glättenden Formteile. Damit kann auch in den folgenden Bedampfungszyklen sichergestellt werden, dass Lösungsmittel an der Oberfläche der Formteile kondensiert und diese weiter geglättet werden.

Die Schritte S4, S4.1 und S5 werden anschließend 16 Mal wiederholt, ehe das Bauteil final getrocknet wird.

### Versuch 4:

Die Formteile werden aus thermoplastischem Polyurethan (TPU) in einem 3D-Druckverfahren hergestellt.

Der Innenraum 21 des druckdichten Behältnisses wird auf eine Temperatur von etwa 130 °C erwärmt (Schritt S1).

Die Formteile werden in den Innenraum 21 eingebracht (Schritt S2) und in dem Innenraum 21 wird ein weitgehendes Vakuum (etwa 8 mbar) erzeugt. Durch das Öffnen und Schließen der Prozesskammer 20, kühlt der Innenraum 21 bei diesem Prozessschritt wieder etwas ab.

Anschließend verweilen die Formteile für 5 Minuten in der vorgewärmten, evakuierten Kammer. Dies hat den Vorteil, dass die Formteile schonend erwärmt werden und dadurch der thermische Stress, der beim Einströmen des heißen Lösungsmitteldampfes ausgelöst wird, auf ein Minimum reduziert werden kann. Gleichzeitig ermöglicht dies ein schonendes Entweichen von möglicherweise im Material gebundenem Wasser und reduziert beim späteren Bedampfen die Menge an kondensiertem Lösungsmittel. Dadurch kann eine Blasenbildung durch Verkochen der Oberfläche verhindert werden. Nach dieser Zeit ist der Innenraum 21 auf eine Temperatur von 115 °C abgekühlt.

Das Lösungsmittelbehältnis 40 wird mit Ethlyllactat als Lösungsmittel gefüllt. Vor oder während der Schritte S1 und S2 wird das Lösungsmittels auf eine Temperatur von etwa 130 °C erwärmt (Schritt S3), wobei im Innenraum 70 ein Druck von etwa 170 mbar erreicht wird. Aufgrund der Dampfdruckkurve von Ethyllactat wird damit erreicht, dass ein Teil des Lösungsmittels verdampft.

Durch Öffnen des Ventils 50 für eine Dauer von etwa 25 s und die Druckdifferenz zwischen Innenraum 21 und Innenraum 70 strömt Lösungsmittel im Schritt S4 in den Innenraum 21 ein und kondensiert an den Formteilen, da diese eine geringere Temperatur aufweisen als der einströmende Lösemitteldampf. Dabei fällt der Druck in dem Lösungsmittelbehälter 40 auf etwa 90 mbar ab, während der Druck in dem Innenraum 21 auf etwa 70 mbar ansteigt. Gleichzeitig erhöht sich die Temperatur in dem Innenraum 21 auf etwa 120 °C.

Nach einer Haltezeit (Schritt S4a) von etwa 12 s (die Haltezeit ist optional) wird das Lösungsmittel abgesaugt (Schritt S4.1) und das Bauteil im Vakuum getrocknet (Schritt S5). Dabei sinkt die Temperatur in dem Innenraum 21 bedingt durch die Verdunstung des Lösungsmittels auf eine Temperatur unterhalb von 120 °C. Nach dem Trocknen kann das Formteil für eine Haltezeit (Schritt S5a) von etwa 30 s im Innenraum 21 verbleiben, bevor es aus dem Innenraum 21 entnommen wird oder das Verfahren mit dem Schritt S4 fortgesetzt wird. Auch hier kann in einer alternativen Ausgestaltung der Erfindung auf die Haltezeit (Schritt S5a) verzichtet werden.

Die Schritte S4, S4.1 und S5 werden anschließend 2 Mal wiederholt, ehe das Bauteil final getrocknet wird.

### Versuch 5:

In einem 250 ml Becherglas wurden 150 ml D-Limonen unter Rühren auf 130 °C erhitzt. Ein 3D-gedrucktes Formteil aus Polypropylen mit einem Schmelzpunkt von 140 °C wurde an einem Draht befestigt und für 1 Sekunde vollständig in das heiße Lösungsmittel getaucht (Tauchverfahren). Nach einer Trockenzeit von jeweils 10 s bei Raumtemperatur wurde der Vorgang insgesamt fünf mal wiederholt. Das Bauteil wurde anschließend mit einem Heißluftföhn bei 100 °C getrocknet. Das Ergebnis ist eine glatte und versiegelte Oberfläche des Bauteils.

### Versucht 6:

Die Formteile werden aus Polypropylen in einem 3D-Druckverfahren hergestellt.

Der Innenraum 21 des druckdichten Behältnisses wird auf eine Temperatur von 125 °C erwärmt (Schritt S1).

Die Formteile werden in den Innenraum 21 eingebracht (Schritt S2) und in dem Innenraum 21 wird ein weitgehendes Vakuum (etwa 10 mbar) erzeugt. Durch das Öffnen und Schließen der Prozesskammer während des Einbringens der Formteile in den Innenraum, kühlt der Innenraum wieder etwas ab (auf etwa 115 °C).

In einer anderen Ausgestaltung kann die Temperatur der Prozesskammer auch auf einer konstanten Temperatur von 125°C gehalten werden.

Die Bauteile werden für 30 Minuten im evakuierten Innenraum (100 mbar) gehalten, wobei sich die Bauteile auf etwa 95°C aufheizen.

Das Lösungsmittelbehältnis wird mit reinem 1,8-Cineol (Eucalyptol) aus natürlichen Quellen als Lösungsmittel gefüllt. Vor oder während der Schritte S1 und S2 wird das bio-basierte Lösungsmittel auf eine Temperatur von etwa 125 °C erwärmt (Schritt S3), wobei im Lösungsmittelbehältnis ein Druck von 230 mbar erreicht wird. Aufgrund der Dampfdruckkurve von 1,8-Cineol wird damit erreicht, dass ein Teil des Lösungsmittels verdampft. Die Heizleistung beträgt 13,2kW und wird über eine Wassermantelheizung eingebracht.

Durch Öffnen des Ventils 50 für eine Dauer von etwa 35 s strömt durch die Druckdifferenz zwischen Innenraum 21 und Lösungsmittelbehälter 40 Lösungsmitteldampf im Schritt S4 in den Innenraum 21 ein und kondensiert an den Formteilen, da diese eine geringere Temperatur als der einströmende Lösungsmitteldampf aufweisen. Dabei fällt der Druck im Lösungsmittelbehälter 40 auf etwa 210 mbar ab, während der Druck im Innenraum 21 auf etwa 200 mbar ansteigt. Gleichzeitig erhöht sich die Temperatur im Innenraum 21.

Nach 35 s wird das Ventil 50 geschlossen, um die Lösungsmitteldampfzufuhr in den Innenraum 21 zu stoppen. In einer Ausgestaltung der Erfindung kann das Formteil dann für etwa 10 s (Haltezeit, Schritt S4a) im Innenraum 21 im Lösungsmitteldampf verweilen.

Anschließend wird das Lösungsmittel aus dem Innenraum 21 durch Vakuum abgesaugt (Schritt S4.1) und das Formteil im Vakuum getrocknet (Schritt S5). Das passiert bei etwa 10 mbar für etwa 120 s. Dabei sinkt die Temperatur in dem Innenraum 21 bedingt durch die Verdunstung des Lösungsmittels auf eine Temperatur unterhalb des Lösemitteldampfes im Lösungsmittelbehälter 40. Dadurch wird sichergestellt, dass die Temperatur des Lösungsmitteldampfes immer über der Temperatur des Innenraums 21 liegt und über der Temperatur der zu glättenden Formteile. Damit kann auch in den folgenden Bedampfungszyklen sichergestellt werden, dass Lösungsmittel an der Oberfläche der Formteile kondensiert und diese weiter geglättet werden.

Die Schritte S4, S4.1 und S5 werden anschließend 20 Mal wiederholt, ehe das Bauteil final getrocknet wird.

In einem weiteren Versuch wurden die Schritte S4, S4.1 und S5 25 Mal wiederholt.

Die Spitzentemperatur der Bauteile nach dem letzten Bedampfungsschritt beträgt etwa 120°C.

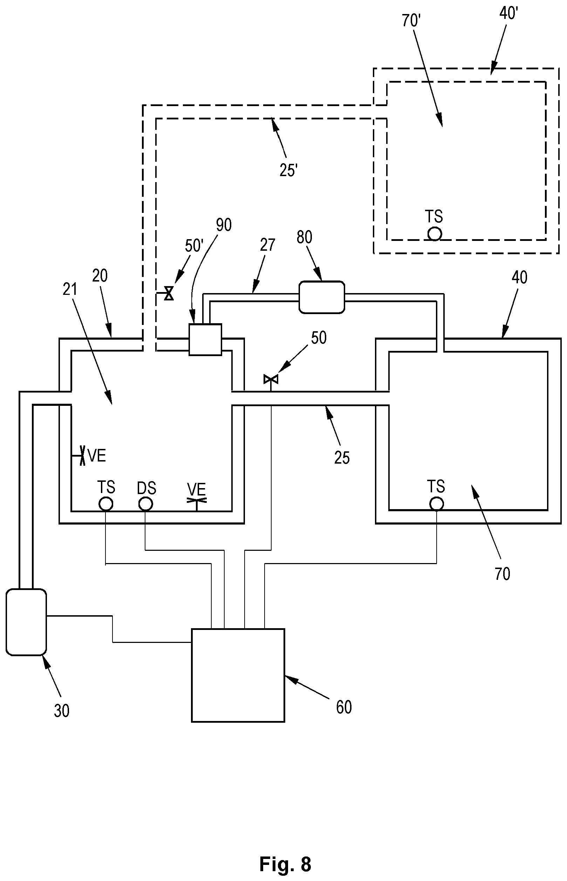

Fig. 8 zeigt in schematischer Weise eine Vorrichtung zum Behandeln einer Oberfläche zumindest eines in einem 3D-Druckverfahren hergestellten Formteils.

Die Vorrichtung umfasst im Wesentlichen ein druckdichtes Behältnis 20 in dessen Innenraum 21 das zu behandelnde Formteil eingebracht wird. Das druckdichte Behältnis 20 ist so ausgestaltet, dass in dem Innenraum 21 ein Unterdruck, insbesondere ein weitgehendes Vakuum erzeugt werden kann.

Ferner umfasst die Vorrichtung ein Lösungsmittelbehältnis 40 zur Bevorratung des in den Innenraum 21 einzubringenden Lösungsmittels 70. Das Lösungsmittelbehältnis 40 kann ebenfalls druckdicht ausgestaltet sein, insbesondere derart, dass in dem Innenraum 70 ein Unterdruck erzeugt werden kann.

Das Lösungsmittelbehältnis 40 und das druckdichte Behältnis 20 sind über eine Zuleitung 25 miteinander verbunden, wobei in der Zuleitung ein Ventil 50 angeordnet sein kann, mit dem die Zufuhr von Lösungsmittel aus dem Lösungsmittelbehältnis 40 in den Innenraum 21 des Behältnisses 20 gesteuert werden kann.

Das druckdichte Behältnis 20 und das Lösungsmittelbehältnis 40 sind jeweils so ausgestaltet, dass einerseits der Innenraum 21 des druckdichten Behältnisses 20 und andererseits das sich in dem Lösungsmittelbehältnis 40 befindliche Lösungsmittel 70 jeweils auf eine vorbestimmte Temperatur erwärmt werden können. Hierzu können beispielsweise (in Fig. 8 nicht gezeigte) Heizmanschetten oder Mantelheizungen an dem jeweiligen Behältnis 20, 40 angeordnet werden. Andere Heizeinrichtungen sind möglich.

Zur Steuerung der Temperaturen in dem Innenraum und des Lösungsmittels können entsprechende Temperatursensoren TS vorgesehen sein, die mit einer Steuer-/Regeleinrichtung 60 gekoppelt sind. Abhängig von den erfassten Temperaturmesswerten kann die Steuer-/Regeleinrichtung 60 die Zufuhr von Wärmeenergie zum Erwärmen des Innenraumes 21 bzw. zum Erwärmen des Lösungsmittels 70 steuern.

Ferner kann das druckdichte Behältnis 20 einen Drucksensor DS aufweisen, mit dem die Druckverhältnisse im Innenraum 21 überwacht werden können. Dieser Drucksensor DS ist ebenfalls mit der Steuer-/Regeleinrichtung 60 gekoppelt.

Die Steuer-/Regeleinrichtung 60 kann zudem eine Vakuumpumpe 30 steuern, mit der im Innenraum 21 des druckdichten Behältnisses 20 ein Unterdruck bzw. ein Vakuum erzeugt werden kann.

Zudem ist die Steuer-/Regeleinrichtung 60 mit dem Ventil 50 gekoppelt, sodass die Steuer-/Regeleinrichtung 60 in Abhängigkeit von der Temperatur im Innenraum 21 das Ventil 50 steuern kann.

Dem Innenraum 21 des druckdichten Behältnisses 20 kann eine Verwirbelungseinrichtung VE zugeordnet sein, die hier als Ventilator ausgestaltet ist. Mit Hilfe der Verwirbelungseinrichtung VE kann ein gleichmäßiges Kondensieren des Lösungsmitteldampfes auf der gesamten Oberfläche - auch an verdeckt liegende oder innenliegende Oberflächenbereiche - des Formteils gewährleistet werden, ohne dass sich Tropfen bilden. In einer Ausgestaltung können auch mehrere Verwirbelungseinrichtungen VE vorgesehen sein.

In einer besonderen Ausgestaltung der Vorrichtung kann diese eine oder mehrere weitere Lösungsmittelbehältnisse 40' aufweisen, die jeweils über eine Zuleitung 25' mit dem druckdichten Behältnis 20 verbunden sind und die ebenfalls druckdicht ausgestaltet sein können. Die Zuleitungen 25' können jeweils ein Ventil 50' aufweisen, mit dem die Zufuhr von Lösungsmittel aus dem jeweiligen Lösungsmittelbehältnis 40' in den Innenraum 21 des Behältnisses 20 gesteuert werden kann.

Ferner können auch die Lösungsmittelbehältnisse 40, 40' jeweils einen Drucksensor DS aufweisen (in Fig. 8 nicht gezeigt), mit dem die Druckverhältnisse in den jeweiligen Innenräume 70, 70' überwacht werden können. Diese Drucksensoren DS sind ebenfalls mit der Steuer-/Regeleinrichtung 60 gekoppelt.

In jedem der Lösungsmittelbehältnisse 40, 40' kann ein anderes Lösungsmittel gespeichert werden, was insbesondere dann vorteilhaft ist, wenn für einen Zyklus ein anderes Lösungsmittel verwendet werden soll als für die anderen Zyklen.

In den Lösungsmittelbehältnissen 40, 40' kann aber auch das gleiche Lösungsmittel gespeichert werden. Dies ist beispielsweise dann vorteilhaft, wenn dieses Lösungsmittel in zwei verschiedenen Zyklen mit einer unterschiedlichen Temperatur dem Innenraum 21 zugeführt werden soll. Das Lösungsmittel in dem Lösungsmittelbehältnis 40 kann so auf eine andere Temperatur erwärmt werden als das in dem Lösungsmittelbehältnis 40' gespeichert Lösungsmittel.

Besonders vorteilhaft ist es, wenn das druckdichte Behältnis 21 mit einer Absaugeinrichtung 90 gekoppelt ist, die ihrerseits über eine Rückleitung 27 mit dem Lösungsmittelbehältnis 40 gekoppelt ist. Die Absaugeinrichtung 90 ist angepasst, den im Innenraum 21 vorhandenen Lösungsmitteldampf und/oder das an den Innenwänden des Innenraumes vorhandene Lösungsmittelkondensat abzusaugen und über die Rückleitung 27 wieder dem Lösungsmittelbehältnis 40 zuzuführen. Damit kann das Lösungsmittel optimal ausgenutzt werden, was einerseits die Kosten für das Glätten senkt und andererseits die Umwelt schont.

Der abgesaugte Lösungsmitteldampf bzw. das abgesaugte Lösungsmittelkondensat können kann vor dem Zuführen zum Lösungsmittelbehältnis 40 aufbereitet werden, insbesondere gereinigt und/oder destilliert werden. Hierzu kann in der Rückführleitung 27 eine Reinigungs- und/oder Destilliereinrichtung 80 vorgesehen sein. Das Destillieren des abgesaugten Lösungsmitteldampfes bzw. des abgesaugten Lösungsmittelkondensats hat sich als besonders vorteilhaft erwiesen, sodass es besonders vorteilhaft ist, destillierbares Lösungsmittel zu verwenden.

Für die weiteren Lösungsmittelbehältnisse 40' können ebenfalls entsprechende Rückleitungen mit entsprechenden Reinigungs- und/oder Destilliereinrichtungen vorgesehen sein, die in Fig. 8 nicht gezeigt sind.

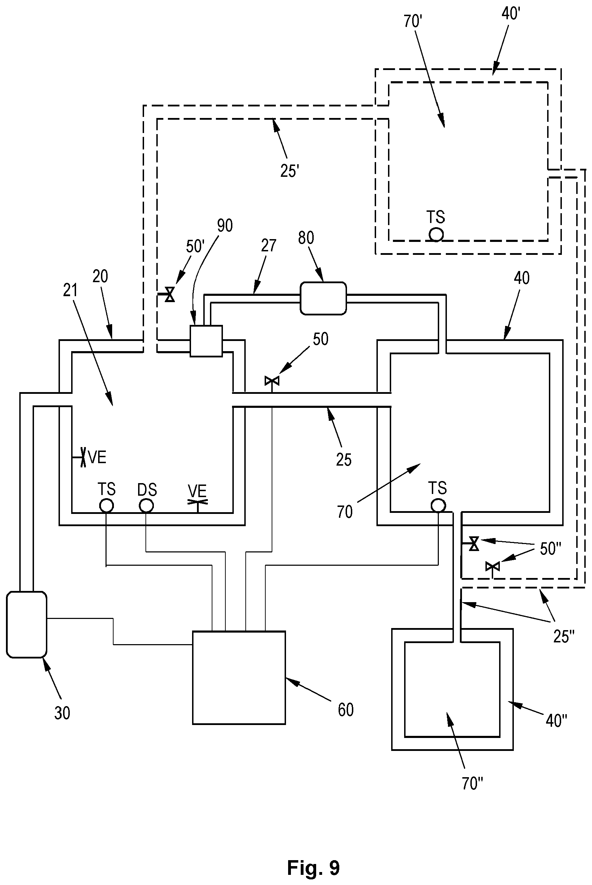

Fig. 9 zeigt in schematischer Weise eine weitere Ausgestaltung einer Vorrichtung zum Behandeln einer Oberfläche zumindest eines in einem 3D-Druckverfahren hergestellten Formteils.

Die Vorrichtung umfasst im Wesentlichen ein druckdichtes Behältnis 20 in dessen Innenraum 21 das zu behandelnde Formteil eingebracht wird. Das druckdichte Behältnis 20 ist so ausgestaltet, dass in dem Innenraum 21 ein Unterdruck, insbesondere ein weitgehendes Vakuum erzeugt werden kann.

Ferner umfasst die Vorrichtung ein Lösungsmittelbehältnis 40 zur Bevorratung eines in den Innenraum 21 einzubringenden bio-basierten Lösungsmittels 70. Das Lösungsmittelbehältnis 40 kann ebenfalls druckdicht ausgestaltet sein, insbesondere derart, dass in dem Innenraum 70 ein Unterdruck erzeugt werden kann.

Das Lösungsmittelbehältnis 40 und das druckdichte Behältnis 20 sind über eine Zuleitung 25 miteinander verbunden, wobei in der Zuleitung ein Ventil 50 angeordnet sein kann, mit dem die Zufuhr von Lösungsmittel aus dem Lösungsmittelbehältnis 40 in den Innenraum 21 des Behältnisses 20 gesteuert werden kann.

Das druckdichte Behältnis 20 und das Lösungsmittelbehältnis 40 sind jeweils so ausgestaltet, dass einerseits der Innenraum 21 des druckdichten Behältnisses 20 und andererseits das sich in dem Lösungsmittelbehältnis 40 befindliche Lösungsmittel 70 jeweils auf eine vorbestimmte Temperatur erwärmt werden können. Hierzu können beispielsweise (in Fig. 9 nicht gezeigte) Heizmanschetten oder Mantelheizungen an dem jeweiligen Behältnis 20, 40 angeordnet sein. Andere Heizeinrichtungen sind möglich.

Zur Steuerung der Temperaturen in dem Innenraum 21 und des Lösungsmittels 70 können entsprechende Temperatursensoren TS vorgesehen sein, die mit einer Steuer-/Regeleinrichtung 60 gekoppelt sind. Abhängig von den erfassten Temperaturmesswerten kann die Steuer-/Regeleinrichtung 60 die Zufuhr von Wärmeenergie zum Erwärmen des Innenraumes 21 bzw. zum Erwärmen des Lösungsmittels 70 steuern.

Ferner kann das druckdichte Behältnis 20 einen Drucksensor DS aufweisen, mit dem die Druckverhältnisse im Innenraum 21 überwacht werden können. Dieser Drucksensor DS ist ebenfalls mit der Steuer-/Regeleinrichtung 60 gekoppelt.

Die Steuer-/Regeleinrichtung 60 kann zudem eine Vakuumpumpe 30 steuern, mit der im Innenraum 21 des druckdichten Behältnisses 20 ein Unterdruck bzw. ein Vakuum erzeugt werden kann. Die Vakuumpumpe 30 kann zudem verwendet werden, um im Innenraum 70 des Lösungsmittelbehältnisses 40 einen Unterdruck oder ein weitgehendes Vakuum zu erzeugen.

Zudem ist die Steuer-/Regeleinrichtung 60 mit dem Ventil 50 gekoppelt, sodass die Steuer-/Regeleinrichtung 60 in Abhängigkeit von der Temperatur und/oder vom Druck im Innenraum 21 das Ventil 50 steuern kann.

Dem Innenraum 21 des druckdichten Behältnisses 20 kann eine Verwirbelungseinrichtung VE zugeordnet sein, die hier als Ventilator ausgestaltet ist. Mit Hilfe der Verwirbelungseinrichtung VE kann ein gleichmäßiges Kondensieren des Lösungsmitteldampfes auf der gesamten Oberfläche - auch an verdeckt liegende oder innenliegende Oberflächenbereiche - des Formteils gewährleistet werden, ohne dass sich Tropfen bilden. In einer Ausgestaltung können auch mehrere Verwirbelungseinrichtungen VE vorgesehen sein.

In einer besonderen Ausgestaltung der Vorrichtung kann diese eine oder mehrere weitere Lösungsmittelbehältnisse 40' aufweisen, die jeweils über eine Zuleitung 25' mit dem druckdichten Behältnis 20 verbunden sind und die ebenfalls druckdicht ausgestaltet sein können. Die Zuleitungen 25' können jeweils ein Ventil 50' aufweisen, mit dem die Zufuhr von Lösungsmittel aus dem jeweiligen Lösungsmittelbehältnis 40' in den Innenraum 21 des Behältnisses 20 gesteuert werden kann, vorzugsweise mit der Steuer-/Regeleinrichtung 60. Die weiteren Lösungsmittelbehältnisse 40' können ebenfalls mit der Vakuumpumpe 30 gekoppelt sein, um im Innenraum 70' des jeweiligen weiteren Lösungsmittelbehältnisses 40' einen Unterdruck oder ein weitgehendes Vakuum zu erzeugen.

In einer Ausgestaltung der Erfindung können die Lösungsmittelbehältnisse 40, 40' mit einem weiteren, zweiten Lösungsmittelbehältnis 40" gekoppelt sein. In dem zweiten Lösungsmittelbehältnis 40" kann ein Gemisch aus bio-basiertem Lösungsmittel und Zusätzen oder auch nur Zusätze gespeichert werden. Über ein Ventil 50" kann die Zugabe dieses Gemisches bzw. der Zusätze in das Lösungsmittelbehältnis 40, 40' gesteuert werden. Dies hat den Vorteil, dass mit der Zeit aufgebrauchte Zusätze in den Lösungsmittelbehältnissen 40, 40' nachdosiert werden können und somit die Stabilität des bio-basierten Lösungsmittel in den Lösungsmittelbehältnissen 40, 40' noch länger gewährleistet werden kann.

Ferner können auch die Lösungsmittelbehältnisse 40, 40', 40" jeweils einen Drucksensor DS aufweisen (in Fig. 9 nicht gezeigt), mit dem die Druckverhältnisse in den jeweiligen Innenräumen 70, 70', 70" überwacht werden können. Diese Drucksensoren DS sind ebenfalls mit der Steuer-/Regeleinrichtung 60 gekoppelt.

In jedem der Lösungsmittelbehältnisse 40, 40' kann ein anderes Lösungsmittel gespeichert werden, was insbesondere dann vorteilhaft ist, wenn für einen Zyklus ein anderes Lösungsmittel verwendet werden soll als für die anderen Zyklen.

In den Lösungsmittelbehältnissen 40, 40' kann aber auch das gleiche Lösungsmittel gespeichert werden. Dies ist beispielsweise dann vorteilhaft, wenn dieses Lösungsmittel in zwei verschiedenen Zyklen mit einer unterschiedlichen Temperatur dem Innenraum 21 zugeführt werden soll. Das Lösungsmittel in dem Lösungsmittelbehältnis 40 kann so auf eine andere Temperatur erwärmt werden als das in dem Lösungsmittelbehältnis 40' gespeichert Lösungsmittel.

Besonders vorteilhaft ist es, wenn das druckdichte Behältnis 21 mit einer Absaugeinrichtung 90 gekoppelt ist, die ihrerseits über eine Rückleitung 27 mit dem Lösungsmittelbehältnis 40 bzw. mit dem Lösungsmittelbehältnis 40' gekoppelt ist. Die Absaugeinrichtung 90 ist angepasst, den im Innenraum 21 vorhandenen Lösungsmitteldampf und/oder das an den Innenwänden des Innenraumes vorhandene Lösungsmittelkondensat abzusaugen und über die Rückleitung 27 wieder dem Lösungsmittelbehältnis 40 zuzuführen. Damit kann das Lösungsmittel optimal ausgenutzt werden, was einerseits die Kosten für das Glätten senkt und andererseits die Umwelt schont.

Der abgesaugte Lösungsmitteldampf bzw. das abgesaugte Lösungsmittelkondensat kann vor dem Zuführen zum Lösungsmittelbehältnis 40, 40' aufbereitet werden, insbesondere gereinigt und/oder destilliert werden. Hierzu kann in der Rückführleitung 27 eine Reinigungs- und/oder Destilliereinrichtung 80 vorgesehen sein. Das Destillieren des abgesaugten Lösungsmitteldampfes bzw. des abgesaugten Lösungsmittelkondensats hat sich als besonders vorteilhaft erwiesen, sodass es besonders vorteilhaft ist, destillierbares Lösungsmittel zu verwenden.

Für die weiteren Lösungsmittelbehältnisse 40' können ebenfalls entsprechende Rückleitungen mit entsprechenden Reinigungs- und/oder Destilliereinrichtungen vorgesehen sein, die in Fig. 9 nicht gezeigt sind.

Das erfindungsgemäße Verfahren und die Vorrichtung zur Durchführung des Verfahrens hat den Vorteil, dass ein Glätten der Oberflächen der Formteile besonders zeiteffizient durchgeführt werden kann, sodass sich das Verfahren auch für ein Oberflächenglätten im industriellen Maßstab eignet. Das Bedampfen in dem jeweiligen Zyklus dauert lediglich wenige Sekunden, da dieser Zeitraum ausreicht, um ausreichend Lösungsmitteldampf in dem Innenraum des druckdichten Behältnisses einströmen zu lassen, mit dem der gewünschte Glättungseffekt in einem Zyklus erreicht wird. Das Vakuumtrocknen dauert ebenfalls nur wenige Sekunden, insbesondere wenn der noch in dem Innenraum vorhandene Lösungsmitteldampf und das sich an den Innenwänden und am Boden des Innenraumes gebildete Lösungsmittelkondensat abgesaugt werden. Damit kann ein Zyklus innerhalb einiger Sekunden bis Minuten durchgeführt werden.

Zudem eignet sich das erfindungsgemäße Verfahren insbesondere auch für flexible Formteile, dessen Oberflächen nicht oder nur unter erheblichem Aufwand mechanisch geglättet werden können. Besonders vorteilhaft ist das erfindungsmäßige Verfahren für thermoplastische Polymere (TPE) auf Olefinbasis (TPO), wie beispielsweise ein PP/EPDM-Copolymer-Blends.

Versuche haben gezeigt, dass mit dem erfindungsgemäßen Verfahren geglättete Oberflächen erzeugt werden können, die sich von Oberflächen von Formteilen, die im Spritzgussverfahren hergestellt wurden, praktisch nicht unterscheiden.

Ein wesentlicher Vorteil der Erfindung liegt jedoch darin, dass durch das Glätten die Formteile eine hochgradig homogene Oberfläche aufweisen, die besonders dann vorteilhaft ist, wenn die Formteile anschließend gefärbt werden. Die durch das erfindungsgemäße Verfahren erreichte homogene Oberfläche der Formteile führt dazu, dass Farben über die gesamte Oberfläche gleich gut aufgenommen werden, sodass sich ein homogenes Farbbild ergibt. Insbesondere wird eine Fleckenbildung effizient verhindert.

### Bezugszeichen:

- 10: Formteil
- 11: Oberfläche des Formteils 10
- 20: druckdichtes Behältnis
- 21: Innenraum des druckdichten Behältnisses 20
- 25, 25', 25": Zuleitung
- 27: Rückleitung
- 30: Vakuumpumpe
- 40, 40': Lösungsmittelbehältnis, vorzugsweise druckdicht
- 50, 50', 50": Ventil
- 60: Steuer-/Regeleinrichtung
- 70, 70', 70": Lösungsmittel bzw. Innenraum des Lösungsmittelbehältnisses 40, 40', 40"
- 80: Reinigungs-/Destilliereinrichtung
- 90: Absaugeinrichtung
- DS: Drucksensor
- H: Haltezeit
- S1 - S6: Schritte des Verfahrens
- T: Trocknen
- TS: Temperatursensor
- VE: Verwirbelungseinrichtung

## Patentansprüche

1. Verfahren zum Behandeln einer Oberfläche (11) eines in einem 3D-Druckverfahren mit einem Kunststoff hergestellten Formteils (10), wobei ein Lösungsmittel aus der Gruppe der bio-basierten Lösungsmittel auf die Oberfläche (11) des Formteils (10) aufgebracht wird, **dadurch gekennzeichnet, dass** das bio-basierte Lösungsmittel ausgewählt wird aus der Gruppe umfassend D-Limonen, L-Limonen, Dipenten, 1,8-Cineol, Pinene, α-Pinen, β-Pinen, δ-Pinen, und Kombinationen hiervon.

2. Verfahren nach Anspruch 1, wobei das Lösungsmittel in dampfförmiger Form auf die Oberfläche (11) des Formteils (10) aufgebracht wird.

3. Verfahren nach Anspruch 1, wobei das bio-basierte Lösungsmittel einen Flammpunkt von über 30 °C, vorzugsweise einen Flammpunkt von über 42 °C aufweist.

4. Verfahren nach Anspruch 1, wobei dem bio-basierten Lösungsmittel vor dem Aufbringen auf die Oberfläche (11) des Formteils (10) zumindest ein Zusatz zugegeben wird.

5. Verfahren nach Anspruch 4, wobei der Zusatz ausgewählt wird aus der Gruppe umfassend
- Antioxidantien,
- Hitze-Stabilisatoren,
- Polymerisationsinhibitoren, und
- Kombinationen bzw. Mischungen hiervon.

6. Verfahren nach Anspruch 4, wobei der Zusatz ausgewählt wird aus der Gruppe umfassend
- sterisch gehinderte Phenolverbindungen,
- sterisch gehinderte Aminde (HALS),
- Phosphite,
- Phosphonite, und
- Kombinationen bzw. Mischungen hiervon.

7. Verfahren nach Anspruch 4, wobei der zumindest eine Zusatz in einer Konzentrationen von zwischen 5 ppm und 4000 ppm bezogen auf das bio-basierte Lösungsmittel dem bio-basierten Lösungsmittel zugegeben wird.

8. Verfahren nach Anspruch 4, wobei der zumindest eine Zusatz einen Siedepunkt und eine Zersetzungstemperatur aufweist, die über dem Siedepunkt des bio-basierten Lösungsmittels, vorzugsweise mindestens 30 °C, besonders bevorzugt mindestens 50 °C über dem Siedepunkt des bio-basierten Lösungsmittels liegt.

9. Verfahren nach Anspruch 1, wobei der Kunststoff ausgewählt wird
- aus der Gruppe umfassend thermoplastische Kunststoffe, oder
- vorzugsweise aus der Gruppe umfassend reine Polymere, Co-Polymere und Gemische hiervon, vorzugsweise Polyester, Polyketone, Polysulfide, Polysulfone, Polyolefine, Polycarbonate, Polythioether, Kautschuke, Latex, Polystyrole und Kombination bzw. Mischungen hiervon,
- besonders bevorzugt aus der Gruppe umfassend Polyolefine, Polyketone, Polystyrole, Polycarbonate, Polysulfone, und Kombinationen bzw. Mischungen hiervon.

10. Verwendung eines Lösungsmittels aus der Gruppe der bio-basierten Lösungsmittel zum Behandeln einer Oberfläche (11) eines in einem 3D-Druckverfahren mit einem Kunststoff hergestellten Formteils (10), wobei das Lösungsmittel, vorzugsweise in dampfförmiger Form auf die Oberfläche (11) des Formteils (10) aufgebracht wird, **dadurch gekennzeichnet, dass** das bio-basierte Lösungsmittel ausgewählt wird aus der Gruppe umfassend D-Limonen, L-Limonen, Dipenten, 1,8-Cineol, Pinene, α-Pinen, β-Pinen, δ-Pinen, und Kombinationen hiervon.

## Claims

1. Method for treating a surface (11) of a molded part (10) produced in a 3D printing process with a plastics material, wherein a solvent from the group of bio-based solvents is applied to the surface (11) of the molded part (10),
**characterized in that** the bio-based solvent is selected from the group comprising D-limonene, L-limonene, dipentene, 1,8-cineole, pinenes, α-pinene, ß-pinene, δ-pinene and combinations thereof.

2. Method according to claim 1, wherein the solvent is applied in vaporous form to the surface (11) of the molded part (10).

3. Method according to claim 1, wherein the bio-based solvent has a flash point above 30°C, preferably a flash point above 42°C.

4. Method according to claim 1, wherein at least one additive is added to the bio-based solvent before it is applied to the surface (11) of the molded part (10).

5. Method according to claim 4, wherein the additive is selected from the group comprising
- antioxidants,
- heat stabilizers,
- polymerization inhibitors and
- combinations or mixtures thereof.

6. Method according to claim 4, wherein the additive is selected from the group comprising
- sterically hindered phenolic compounds,
- sterically hindered amines (HALS),
- phosphites,
- phosphonites and
- combinations or mixtures thereof.

7. Method according to claim 4, wherein the at least one additive is added to the bio-based solvent at a concentration of between 5 ppm and 4000 ppm based on the bio-based solvent.

8. Method according to claim 4, wherein the at least one additive has a boiling point and a decomposition temperature that is above the boiling point of the bio-based solvent, preferably at least 30°C, more preferably at least 50°C above the boiling point of the bio-based solvent.

9. Method according to claim 1, wherein the plastics material is selected
- from the group comprising thermoplastic plastics materials, or
- preferably from the group comprising pure polymers, copolymers and mixtures thereof, preferably polyesters, polyketones, polysulfides, polysulfones, polyolefins, polycarbonates, polythioethers, rubbers, latex, polystyrenes and combinations or mixtures thereof,
- particularly preferably from the group comprising polyolefins, polyketones, polystyrenes, polycarbonates, polysulfones and combinations or mixtures thereof.

10. Use of a solvent from the group of bio-based solvents for treating a surface (11) of a molded part (10) produced in a 3D printing process with a plastics material, wherein the solvent is applied, preferably in vaporous form, to the surface (11) of the molded part (10), **characterized in that** the bio-based solvent is selected from the group comprising D-limonene, L-limonene, dipentene, 1,8-cineole, pinenes, α-pinene, ß-pinene, δ-pinene and combinations thereof.

## Revendications

1. Procédé permettant le traitement d'une surface (11) d'une pièce moulée (10) fabriquée à partir d'une matière plastique selon un procédé d'impression 3D, dans lequel un solvant appartenant au groupe des solvants d'origine végétale est appliqué sur la surface (11) de la pièce moulée (10),
**caractérisé en ce que** le solvant d'origine végétale est choisi dans le groupe comprenant le D-limonène, L-limonène, dipentène, 1,8-cinéol, pinène, α-pinène, ß-pinène, δ-pinène et des combinaisons de ceux-ci.

2. Procédé selon la revendication 1, dans lequel le solvant est appliqué sous forme de vapeur sur la surface (11) de la pièce moulée (10).

3. Procédé selon la revendication 1, dans lequel le solvant d'origine végétale présente un point d'éclair supérieur à 30 °C, de préférence supérieur à 42 °C.

4. Procédé selon la revendication 1, dans lequel au moins un additif est ajouté au solvant d'origine végétale avant son application sur la surface (11) de la pièce moulée (10).

5. Procédé selon la revendication 4, dans lequel l'additif est sélectionné dans le groupe comprenant
- antioxydants,
- stabilisateurs thermiques,
- inhibiteurs de polymérisation, et
- des combinaisons ou des mélanges de ceux-ci.

6. Procédé selon la revendication 4, dans lequel l'additif est sélectionné dans le groupe comprenant
- composés phénoliques à encombrement stérique,
- amines à encombrement stérique (HALS),
- phosphites,
- phosphonites, et
- des combinaisons ou des mélanges de ceux-ci.

7. Procédé selon la revendication 4, dans lequel ledit au moins un additif est ajouté au solvant d'origine végétale à des concentrations comprises entre 5 ppm et 4 000 ppm par rapport au solvant d'origine végétale.

8. Procédé selon la revendication 4, dans lequel ledit au moins un additif présente un point d'ébullition et une température de décomposition supérieurs au point d'ébullition du solvant d'origine végétale, de préférence d'au moins 30 °C, et de préférence d'au moins 50 °C au-dessus du point d'ébullition du solvant d'origine végétale.

9. Procédé selon la revendication 1, dans lequel la matière plastique est choisie
- dans le groupe comprenant des matières thermoplastiques, ou
- de préférence dans le groupe comprenant des polymères purs, copolymères et des mélanges de ceux-ci, de préférence des polyesters, polycétones, polysulfures, polysulfones, polyoléfines, polycarbonates, polythioéthers, caoutchoucs, latex, polystyrènes et combinaisons ou mélanges de ceux-ci,
- de préférence dans le groupe comprenant des polyoléfines, polycétones, polystyrènes, polycarbonates, polysulfones, ainsi que des combinaisons ou mélanges de ceux-ci.

10. Utilisation d'un solvant appartenant au groupe des solvants d'origine végétale pour le traitement d'une surface (11) d'une pièce moulée (10) fabriquée à partir d'une matière plastique selon un procédé d'impression 3D, dans laquelle le solvant est appliqué, de préférence sous forme de vapeur, sur la surface (11) de la pièce moulée (10), **caractérisée en ce que** le solvant d'origine végétale est choisi dans le groupe comprenant le D-limonène, L-limonène, dipentène, 1,8-cinéol, pinène, α-pinène, ß-pinène, δ-pinène et des combinaisons de ceux-ci.
